(19) Europäisches Patentamt / European Patent Office / Office européen des brevets

(11) **EP 3 621 168 B1**

(12) **EUROPÄISCHE PATENTSCHRIFT**

(45) Veröffentlichungstag und Bekanntmachung des Hinweises auf die Patenterteilung:
**21.01.2026   Patentblatt 2026/04**

(21) Anmeldenummer: **19193354.8**

(22) Anmeldetag: **23.08.2019**

(51) Internationale Patentklassifikation (IPC):
**H02H 9/00** *(2006.01)*     **H02J 3/00** *(2026.01)*
**H02H 3/02** *(2006.01)*

(52) Gemeinsame Patentklassifikation (CPC):
**H02J 3/0012; H02H 3/025; H02H 9/001**

(54) **VERFAHREN ZUR KONTROLLE VON STOSSKURZSCHLUSSSTRÖMEN SOWIE HALBLEITER-KONTROLLVORRICHTUNG DAFÜR**

METHOD FOR CONTROLLING SHOCK SHORT-CIRCUIT CURRENTS, AND SEMICONDUCTOR CONTROL DEVICE FOR SAME

PROCÉDÉ DE VÉRIFICATION DE COURANTS DE COURT-CIRCUIT AINSI QUE DISPOSITIF DE VÉRIFICATION À SEMI-CONDUCTEUR CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.08.2018   DE 102018121022**

(43) Veröffentlichungstag der Anmeldung:
**11.03.2020   Patentblatt 2020/11**

(73) Patentinhaber: **Hochschule Rheinmain University of Applied
Sciences Wiesbaden Rüsselsheim
65197 Wiesbaden (DE)**

(72) Erfinder:
• **Attenberger, Wilfried
84034 Landshut (DE)**
• **Klausmann, Harald
64521 Groß-Gerau (DE)**

(74) Vertreter: **Stumpf, Peter
c/o TransMIT GmbH
Kerkrader Strasse 3
35394 Gießen (DE)**

(56) Entgegenhaltungen:
**EP-A1- 1 993 184     WO-A1-2017/167784
WO-A1-92/09943     WO-A2-2010/049231
GB-A- 2 375 902     JP-A- S52 101 451
US-B1- 9 966 206**

• **F. VAN OVERBEEKE ET AL: "Fault current source to ensure the fault level in inverter-dominated networks", IET CONFERENCE PUBLICATIONS, 0369, 9 June 2009 (2009-06-09) - 11 June 2009 (2009-06-11), pages 1 - 4, XP055709873, DOI: 10.1049/cp.2009.0711**

## Beschreibung

Die vorliegende Erfindung betrifft eine Vorrichtung zur Kontrolle von Stoßkurzschlußströmen, d.h. der Einstellung auf einen bestimmten Wert oder eine komplexe Situation durch Begrenzung und/oder kontrollierten Aufbau der Stoßkurzschlußsttöme in Stromverteilungsnetzen ("Halbleiter-Steuervorrichtung", bzw. synonym "Halbleiter-Kontrollvorrichtung") und deren Verwendung.

Die erfindungsgemäße Vorrichtung dient somit zur Sicherstellung der Netzstabilität in Stromversorgungsnetzen, bevorzugt in solchen mit kleinräumig verteilten Einspeisepunkten, was üblicherweise bei Mittelspannungsnetzen der Fall ist.

Die vorliegende Erfindung betrifft eine Halbleiter-Abschaltvorrichtung und deren Verwendung. Weiterhin betrifft die vorliegende Erfindung auch eine Vorrichtung zur Erzeugung und Einspeisung definierter Kurzschlußströme in das Stromnetz, so daß dieses dadurch hochgefahren/gestartet, d.h. in Betrieb genommen oder in Betrieb gehalten werden kann, obwohl es sich in einem instabilen Betriebszustand befindet ("Halbleiter-Strombegrenzungsvorrichtung"). Beide Teilaspekte der vorliegenden Erfindung (Halbleiter-Strombegrenzungsvorrichtung und Halbleiter-Abschaltvorrichtung) dienen jeder für sich alleine oder in Kombination miteinander der Sicherstellung der Netzstabilität.

Die Schrift WO 92/09943 A1 offenbart demgegenüber eine Vorrichtung zur Kontrolle von Stoßkurzschlußströmen in Stromversorgungsnetzen, die eine Steuerschaltung zum periodischen Erzeugen eines Unterbrechungssignals umfasst, um den Strompfad für vorgeschriebene Intervalle zu unterbrechen und den einer Last zugeführten Strom zwischen einem maximalen Strompegel und einem minimalen Strompegel zu steuern. Diese Steuerung erfolgt somit in vorgeschriebenen periodischen Abständen (Intervallen), und nicht anlaßbezogen, d.h. bei Auftreten eines Stoßkurzschlußstromes.

## Beschreibung

Mit zunehmender Zuschaltung von lokalen (also dezentralen) Stromerzeugern an die Stromverteilungsnetze wächst die Notwendigkeit, den Beitrag dieser zugebauten Anlagen an Stoßkurzschlußströmen im Stromverteilungsnetz zu unterdrücken. In manchen Fällen ist aber eine komplexere Reaktion als eine einfache Abschaltung notwendig. Daher ist es vorteilhaft für die Netzstabilität, wenn ein in einen instabilen Betriebszustand geratenes Stromnetz durch Einspeisung definierter Kurzschlußströme von den Einspeisepunkten der dezentralen Stromerzeuger aus (bzw. von untergeordneten Teilnetzen aus, d. h. "von unten") hochgefahren (gestartet, in Betrieb genommen) oder bei lediglich eingetretener Instabilität wieder stabilisiert werden kann. Letzteres entspricht der Situation, daß das untergeordnete Teilnetz bzw. der (Netz-)Einspeisepunkt während einer Instabilität (Netzinstabilität) weiterhin in Betrieb gehalten wird.

Die Definition, was unter einer (Netz-)Instabilität sowie deren Erkennung und Beseitigung zu verstehen ist, ist in entsprechenden Normvorgaben geregelt und dem Fachmann bekannt. Daraus ergeben sich auch in bekannter Weise die zu erfassenden Grenzwerte an Strömen und Spannungen, um einen Netzfehler als solchen zu erkennen sowie Vorgaben zu seiner Beseitigung. Beispiele für derartige Regelungen sind die DIN EN 60909-0:2013-02 und die VDE 0102:2013-02, worin die Berechnung und implizit auch die Erfassung der Kurzschlusströme geregelt sind. Grundsätzlich gibt der Netzbetreiber einen zulässigen Kurzschlusstrom für die Anlage vor - ist dieser Strom überschritten, muss die Anlage den Strom begrenzen oder abschalten. Die VDE-AR-N 4105 gibt im Bereich der Niederspannung, und die VDE-AR-N 4110 im Bereich der Mittelspannung Fehler vor, bei denen die Anlage dennoch für bestimmte Zeiten am Netz bleiben muss.

## Stand der Technik

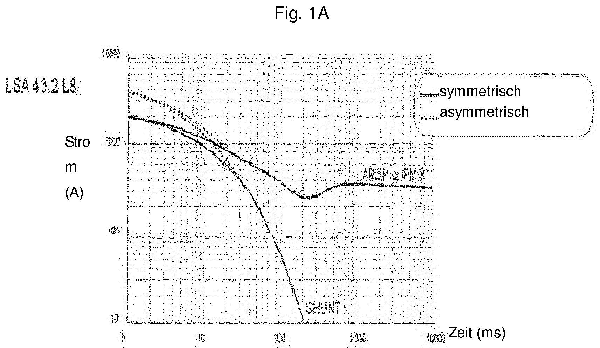

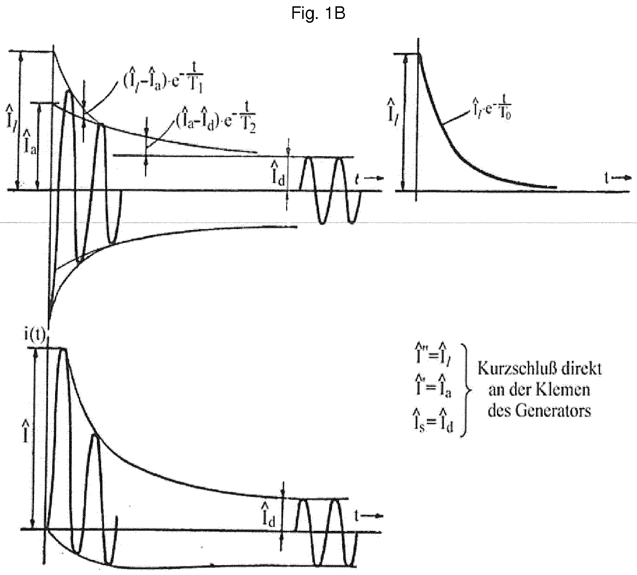

Besonders in dicht ausgebauten Mittelspannungsnetzen, d.h. Stromverteilungsnetzen, die im Bereich von 1 kV bis 50 kV betrieben werden, ist der zusätzliche Anschluß von Asynchron- und besonders von Synchrongeneratoren zur Stromerzeugung problematisch, da diese einen hohen Stoßkurzschlußstrom aufweisen. Dies gilt analog auch auf übergeordneter Ebene für Stromverteilungsnetze, die mit derartigen Mittelspannungsnetzen verbunden sind, aus denen - bedingt durch die hoch variable Einspeisungsleitung dezentraler regenerativer Stromerzeuger - Stoßströme in das übergeordnete Stromnetz resultieren können. Ein Generator vom Typ Leroy-Somer LSA 43.2, der typisch ist für kleine Blockheizkraftwerke ("BHKW"), hat bei einem Nennstrom von 115 A einen maximalen Stroßstrom von ca. 1 kA (vgl. Fig. 1A, 1B). Dieser ist zwar nach 70 ms auf den Nennstrom gesunken, Netzbetreiber fordern zum Schutz vor elektrodynamischen Kräften jedoch trotzdem eine Abschaltung innerhalb von Mikrosekunden (also bereits in der ansteigenden Flanke!), damit der Strom von 1 kA gar nicht erst auftritt. Dies gilt vor allem für die stark vermaschten Mittelspannungsnetze, beispielsweise in Großstädten. Eine Erkennung des Stroms und eine Abschaltung innerhalb von wenigen Milisekunden (ms) sowie die Wieder-Zuschaltung des laufenden Generators nach Abklingen des Stoßkurzschlußstromes würde das Problem lösen.

Zur Lösung derartiger Probleme gibt es im Stand der Technik folgende Möglichkeiten:

- Mechanische Schalter - diese haben ein hohes Isolationsvermögen, weisen niedrige Verluste auf und sind wieder einschaltbar. Sie sind jedoch für diesen Zweck, die Vermeidung von Stoßströmen in Stromverteilungsnetzen, zu langsam.
- Sicherungen - diese sind jedoch nicht wieder einschaltbar und ebenfalls zu langsam.
- $I_s$-Begrenzer (oder $I_s$-Schaltungen) - bei diesen Vorrichtungen wird eine Sprengkapsel ausgelöst, die die Erzeugungseinrichtung schnell vom Netz trennt. Über komplexe Ansteuerungen sind diese Vorrichtungen selektiv genug, um für den Zweck eingesetzt werden zu können, aber sehr teuer (> 70000 €) und nicht wieder einschaltbar. Sie müssen daher nach einmaliger Auslösung ersetzt werden. Mit "selektiv" ist gemeint, dass über die komplexe Ansteuerung des $I_s$-Begrenzers in Echtzeit erkannt werden muß, wann ein echter Stoßkurzschlußstrom vorliegt, und wann es sich im aktuellen Fall lediglich um eine weniger kritische Netzinstabilität (sog. "Flicker" aufgrund von an sich unkritischen mechanischen Schaltvorgängen) handelt. Nur im Falle eines echten Stoßkurzschlußstroms darf der $I_s$-Begrenzer auslösen.
- Umrichter - diese weisen hohe Verluste auf und sind ebenfalls sehr teuer.

Die hier offenbarte Halbleiter-Abschaltvorrichtung ermöglicht es, diesen Stoßkurzschlußstrom in einem Überschreitungsfall mehr oder weniger hart abzuschalten. Dies ist besonders günstig bei einem Anschluss in der Umgebung von schwach ausgebauten Mittelspannungsnetzen, die keinen weiteren Kurzschlussstrom aufnehmen können.

Im Hinblick auf zukünftige Stromnetze, die im Wesentlichen aus dezentral verteilten erneuerbaren Stromerzeugern bestehen (mit begrenzter Fähigkeit, Kurzschlußstrom bereitzustellen), wird sich diese Möglichkeit als ungenügend herausstellen. Zum einen basiert der Distanzschutz auf definierten Überströmen und zum anderen wird die "low Voltage ride Through"-Fähigkeit für ein stabiles Netz ohne Großkraftwerke wichtiger. Unter "low Voltage ride Through" versteht der Fachmann die - zumindest teilweise - Toleranz von elektrischen Erzeugungseinheiten wie Generatoren (oder generell Einspeiseeinheiten wie etwa auch untergeordnete Teilnetze gegenüber dem jeweils übergeordneten Netz) gegenüber kurzzeitigen Spannungseinbrüchen: Eine Erzeugungs-/Einspeiseeinheit darf sich bei Spannungseinbrüchen nicht unmittelbar vom Stromnetz trennen, sondern muss eine bestimmte Zeit weiter mit dem Netz verbunden bleiben und zumindest teilweise weiterhin Strom einspeisen. Kurzzeitige Spannungseinbrüche können zum Beispiel infolge von Netzfehlern wie etwa bei Kurzschlüssen, Erdschlüssen oder Blitzeinschlägen auftreten. Durch die Fähigkeit von dezentralen Erzeugungsanlagen bzw. untergeordneten Teilnetzen zum "low Voltage ride Through" wird ein großflächiger Netzzusammenbruch infolge eines Dominoeffektes von vielen kleineren Erzeugungeranlagen/Teilnetzen bei Fehlern im übergeordneten Übertragungsnetz verhindert. Verfahren und Vorrichtungen zur Sicherstellung des Distanzschutzes sind dem Fachmann aus dem Stand der Technik ebenfalls bekannt, beispielsweise in Form von Distanzschutzrelais. Insbesondere in der Übergangsphase des Netzumbaus ist die Fähigkeit, den Überstrom kontrolliert an das Netz abzugeben von großem Nutzen. Dies gilt ganz besonders ab dem Zeitpunkt, ab dem die Großkraftwerke nicht mehr genug Strom zur Verfügung stellen können, um die Netzstabilität überwiegend sicherzustelllen. In einem von Grund auf vollständig neu dezentral konzipierten Netz könnte man das gesamte Sicherheitskonzept neu aufstellen, in bereits bestehenden ("historisch gewachsenen") Netzen besteht diese Möglichkeit der vollständigen Neukonzeption der Netzsicherheit nicht. Die vorliegende Erfindung befasst sich daher auch mit der kontrollierten Bereitstellung von variabel einstellbaren Kurzschlußströmen in ein Nieder- oder Mittelspannungsnetz.

Bezüglich des Wieder-Hochfahrens, d.h. des Starts von Stromnetzen gibt es im Stand der Technik keinerlei Möglichkeit, dies "von unten", d.h. ausgehend von einzelnen Netzeinspeiseknoten oder von Umrichterstationen vom untergeordneten Netz (bzw. der Einspeisevorrichtung) heraus vorzunehmen. (Bei einem Einspeisepunkt handelt es sich letztendlich ebenfalls um einen Netzknoten, und zwar um einen solchen, der sich am Rande des Netzes befindet, also "randständig" ist.) Im Stand der Technik kann ein ausgefallenes (Teil-)Stromnetz nur von der übergeordneten Instanz (d.h. dem übergeordneten Netz) aus wieder in Betrieb genommen werden. Dies ist nachteilig für eine schnelle (ggf. automatisierte) Wiederinbetriebnahme nach Netzausfall, da eine übergeordnete Instanz zur Steuerung des Hochfahr-Prozesses zwingend erforderlich ist, die zunächst alle "Bereitschaftsmeldungen" der untergeordneten Netze entgegennehmen und bewerten muß, um diese untergeordneten Netze dann anschließend nach und nach wieder an das übergeordnete Netz anzuschließen.

## Aufgabe

Aufgabe der vorliegenden Erfindung ist es, die im Stand der Technik bestehenden Probleme zu lösen, indem eine Vorrichtung bereitgestellt wird, um Stoßströme ausreichend schnell sicher zu erkennen und zu begrenzen, und dadurch Stromverteilungsnetze vor Stoßströmen zu schützen. die Vorrichtung soll zudem kostengünstig und wiederverwendbar, d.h. wiedereinschaltbar sein, so dass keine Unterscheidung zwischen echten Stoßkurzschlußströmen und lediglich unkritischen Netzinstabilitäten infolge harmloser mechanischer Schaltvorgänge ("Flicker") getroffen werden muß.

Aufgabe der vorliegenden Erfindung ist es weiterhin, nicht nur die im Stand der Technik bestehenden Probleme bezüglich Vermeidung von Stoßkurzschlußströmen zu lösen (wie vorstehend beschrieben), sondern ebenfalls, eine Möglichkeit bereitzustellen, übergeordnete, in kritischem Betriebszustand befindliche oder ausgeschaltete, Stromnetze aus untergeordneten Stromnetzen heraus wieder hochzufahren, d.h. zu starten/in Betrieb zu nehmen bzw. zu stabilisieren, indem eine Vorrichtung bereitgestellt wird, womit durch Einspeisung definierter Kurzschlußströme aus dem untergeordneten Netz in das übergeordnete Netz und Beobachtung des Verhaltens des übergeordneten Netzes, das übergeordnete Netz aus dem untergeordneten heraus in Betrieb genommen bzw. stabilisiert werden kann. Welche für die Beobachtung des Verhaltens des übergeordneten Netzes erforderlichen Netzparameter (wie beispielsweise Spannung, Stromfluß, Phasenlage und dergleichen) zu überwachen sind, sowie die Art der Bestimmung der erforderlichen Parameter, ist dem Fachmann aus dem Stand der Technik sowie aus den einschlägigen Normvorgaben bekannt.

Die Gesamtaufgabe besteht somit darin, Stoßkurzschlußströme in Stromnetzen zu kontrollieren, d.h. abzuschalten oder auf einen definierten Kurzschlußstrom zu begrenzen, und setzt sich aus den beiden Teilaufgaben "Stoßkurzschlußströme abschalten" und "Kurzschlußströme begrenzen/definiert erzeugen" zusammen, wobei jede der beiden Teilaufgaben für sich bereits eine erfindungsgemäße Kontrolle von Stoßkurzschlußströmen darstellt, und somit eine technische Verbesserung der Netzstabilität bewirkt.

## Lösung der Aufgabe

Diese Aufgabe wird erfindungsgemäß gelöst durch die kennzeichnenden Merkmale des Hauptanspruchs 1. Die Unteransprüche stellen vorteilhafte Ausgestaltungen der Erfindung dar. Im Zuge der Beschreibung der Erfindung sowie der Ansprüche gemachte Bereichsangaben umfassen stets alle - nicht genannten - Zwischenwerte und alle denkbaren Teilintervalle.

Die Erfordernis der Selektivität, wie sie für $I_s$-Begrenzer zwingend erforderlich ist, besteht bei der erfindungsgemäßen Vorrichtung nicht, denn infolge der Reversibilität des Schaltvorganges kann der über die erfindungsgemäße Abschaltvorrichtung an das Spannungsnetz angeschlossene Asynchron- oder Synchrongenerator günstigenfalls bereits in der nächsten Halbwelle wieder zugeschaltet werden, und zwar entweder durch die übergeordnete Netzsteuerung oder ggf. durch die in der Erfindung enthaltene interne Eigensteuerung.

Die erfindungsgemäße Lösung zur Erreichung der erforderlichen hohen Schaltgeschwindigkeiten basiert bevorzugt auf Halbleitern; sie weist zwar natürlicherweise auch Verluste auf, ähnlich wie die im Stand der Technik bekannten Standardlösungen, dies ist jedoch insgesamt nicht nachteilig, da die mehrfache Reversibilität des Schaltvorganges dazu führt, dass die erfindungsgemäße Vorrichtung, d.h. der Schalter, verschleißfrei arbeitet. Als "Schalter" wird hier und im Folgenden die gesamte erfindungsgemäße Abschaltvorrichtung (Synonym: "Halbleiter-Abschaltvorrichtung") bezeichnet; das eigentliche schaltende Halbleiterbauteil, beispielsweise ein IGBT oder ein MOSFET (metal-oxide-semiconductor fieldeffect transistor), wird zur Unterscheidung davon als "Halbleiterschaltelement" bezeichnet und die antiparallele Anordnung zweier derartiger Halbleiterschaltelemente als "bidirektionaler Halbleiterschalter". Die schaltenden Halbleiterbauteile sind diejenigen Bauteile der Vorrichtung, die die Fähigkeit aufweisen, Ströme abzuschalten.

Die erfindungsgemäße Ausgestaltung der Vorrichtung mit mindestens einem induktiven Element (z. B. einer Spule) mit definierter Induktivität zur Erzeugung und Einspeisung definierter Kurzschlußströme in das Stromnetz wird im Rahmen dieser Offenbarung als "Strombegrenzer" bezeichnet, da durch sie bewirkt wird, daß die Netzstabilität erhöht wird durch Begrenzen und Einspeisen des Stoßkurzschlußstromes aus dem untergeordneten Netz bzw. aus dem Einspeisepunkt in das übergeordnete Netz. Dies entspricht auch dem Verbinden eines in Betrieb befindlichen BHKW's oder eines in Betrieb befindlichen Teilnetzes mit einem nicht in stabilem Betriebszustand befindlichen übergeordneten Netz. Das heißt, die gesamte erfindungsgemäße Vorrichtung zur Kontrolle von Stoßkurzschlußströmen umfasst zwei grundsätzliche Ausführungsvarianten:

a) die gesamte erfindungsgemäße Abschaltvorrichtung (Synonym: "Halbleiter-Abschaltvorrichtung", auch "Schalter" oder "Halbleiter-Abschaltvorrichtung" genannt), und
b) die gesamte erfindungsgemäße "Strombegrenzungsvorrichtung" (synonym "Strombegrenzer", oder auch "Halbleiter-Strombegrenzungsvorrichtung" genannt), die die Vorrichtung gemäß Absatz a) umfasst und darüber hinaus mindestens ein induktives Element (z.B. eine Spule) mit definierter Induktivität, mindestens einen Prozessor oder einen FPGA oder eine entsprechende dem Fachmann bekannte analoge Steuerschaltung, sowie optional mindestens ein weiteres Halbleiterschaltelement aufweist.

Beide Aufgaben, sowohl das Begrenzen eines Stoßkurzschlußstromes aus einem Unternetz bzw. Einspeisepunkt zur Inbetriebnahme oder Stabilisierung eines übergeordneten Netzes, als auch das Abschalten eines Einspeisepunktes bzw. Unternetzes dienen der Erhöhung der Netzstabilität: Ersteres bevorzugt in der Phase der Inbetriebnahme oder in einer kritischen Betriebsphase des übergeordneten Netzes zum Aufbau der Netzstabilität, letzteres bevorzugt zur Erhaltung der Netzstabilität eines bereits stabil in Betrieb befindlichen übergeordneten Netzes.

Diese beiden Teilaspekte können sowohl unabhängig voneinander realisiert, d.h. vorgesehen/verwendet werden, als auch in Kombination miteinander. Bei Realisierung in Kombination miteinander ist eine Steuerungs-/Regelungslogik vorzusehen, die erfindungsgemäß bevorzugt lokal implementiert oder per Fernwartung vorgesehen sein kann, und die je nach aktuellem Betriebszustand des Netzes den aktuellen Betriebszustand der Vorrichtung zur Kontrolle von Stoßkurzschlußströmen wie folgt einstellt: Ist das Netz stabil in Betrieb, wird in den Modus der Abschaltung von Stoßkurzschlußströmen geschaltet, ist das Netz außer Betrieb oder in einem kritischen Betriebszustand, wird in den Modus der definierten Erzeugung und Einspeisung von Kurzschlußströmen geschaltet.

Diese Aufgabe (die Einspeisung definierter Kurzschlußströme) wird durch eine Anordnung von bidirektionalen Schaltern und Induktivitäten gelöst, die - wenn sie hinter einen Synchron- oder Asynchrongenerator geschaltet sind - durch ihre Ansteuerung einen Kurzschlussstrom oder jeden anderen Strom auf einen gewünschten Wert einstellen und diesen Strom auch für eine vorgegebene Zeit halten können. Die maximal mögliche Zeit ergibt sich aus der Bauteilauswahl und kann gegebenenfalls auch unbegrenzt sein. Ausschlaggebend ist hierbei vor allem die bauartbedingt vorgegebene Verlustleistung der Bauteile, bzw. die Ausgestaltung der Kühlung der Vorrichtung. Ist diese so gestaltet, dass die maximale Bauteiltemperatur nicht überschritten wird, ist ein unbegrenzter Betrieb, d.h. die zeitlich unbegrenzte Aufrechterhaltung des Kurzschlußstromes, möglich. Dem Fachmann ist aus dem Stand der Technik bekannt, wie die Bauteile zu dimensionieren/auszuwählen sind, bzw. die Kühlung auszugestalten ist, um so einen bestimmten Zeitraum für die Aufrechterhaltung des einzuspeisenden Kurzschlußstromes vorzugeben, bzw. zeitlich unbegrenzte Einspeisung des definierten Kurzschlußstroms zu ermöglichen.

Die erfindungsgemäße Vorrichtung zur Kontrolle von Stoßkurzschlußströmen in Stromversorgungsnetzen umfasst somit beide (Teil-)Vorrichtungen jeweils einzeln oder gemeinsam.

Neben den bevorzugt erfindungsgemäß verwendeten Halbleiterschaltelementen fällt die Verwendung anderer nichtmechanischer Schaltelemente wie beispielsweise Thyratrons ebenfalls in den Umfang der Erfindung. Der Begriff "nichtmechanische Schaltelemente" umfasst daher hier und im folgenden sowohl Halbleiterschaltelemente wie beispielsweise IGBTs und MOSFETs als auch beispielsweise Thyratrons oder andere nicht halbleiterbasierte nichtmechanische Schaltelemente.

Als "Unterdrückung" von Stoßkurzschlußströmen wird hierbei verstanden, den Stoßkurzschlußstrom entweder zu verhindern oder zu reduzieren.
die Vorrichtung kann sowohl in einem Stromverteilungsnetz mit als auch in einem ohne Neutralleiter durchgeführt werden.

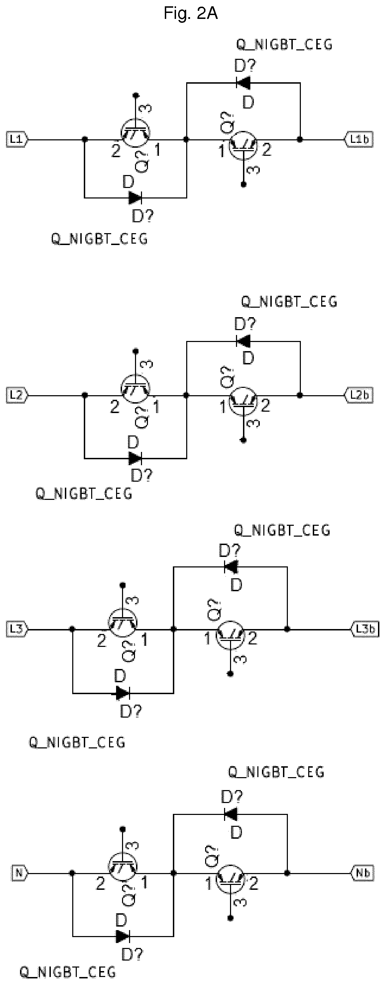

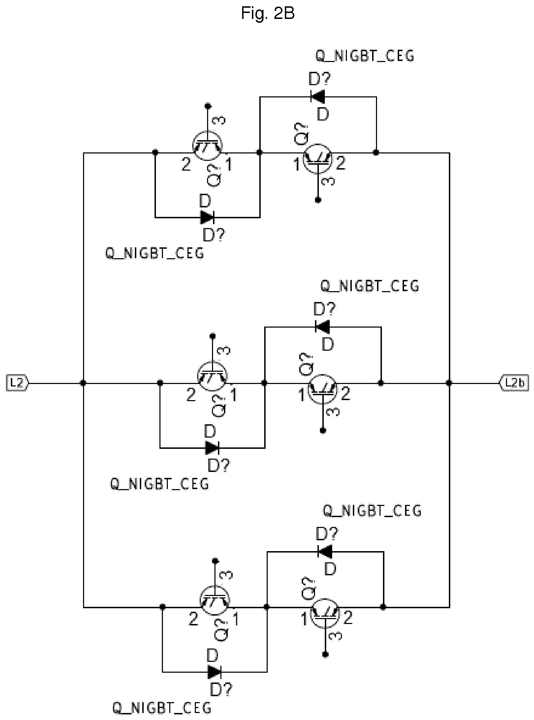

Bei den antiparallel zueinander verschalteten Halbleiterschaltelementen handelt es sich um sogenannte aktive Halbleiterbauteile wie beispielsweise Transistoren, IGBTs, MOSFETs oder Dioden, deren Schaltzustände durch elektronische Steuersignale oder den Stromfluß selbst beeinflusst werden können, und sie befinden sich dabei in den Strompfaden jeder Phase des Wechselspannungs-Stromverteilungsnetzes. Bei Verwendung von IGBTs mit integrierter Freilaufdiode sind der eigentliche Transistor und die Diode innerhalb des Gehäuses des IGBT's bereits wie erforderlich angeordnet. Die Verwendung von IGBTs ist daher besonders bevorzugt. Die betreffende Anordnung kann aber auch durch entsprechende Verschaltung von jeweils mindestens zwei Transistoren ohne integrierte Freilaufdiode und mindestens zwei separaten Dioden realisiert werden, wobei natürlich auch die Dioden antiparallel zueinander, d. h. in Gegenrichtung zueinander - verschaltet sind, und zwar parallel zu den mindestens zwei Transistoren (vgl. z.B. Fig. 2A, 2B). Mit der Formulierung "Ansteuerung der antiparallel zueinander verschalteten Halbleiterbauteile" ist also grundsätzlich immer nur die Ansteuerung der Transistoren gemeint, da nur diese durch ein separates Steuersignal angesteuert werden können. Der Grenzwert des Summensignals wird frei gewählt und vorgegeben, je nachdem wie schnell die Abschaltung in der ansteigenden Flanke des Stoßstromes erfolgen soll. Beispielsweise kann ein Wert von $U_{mess-sum}$ als Grenzwert vorgegeben werden, der dem x-fachen Nennstrom entspricht (x > 1), etwa dem doppelten, dreifachen, vierfachen, fünffachen, sechsfachen, siebenfachen, achtfachen, neunfachen oder zehnfachen Nennstrom.

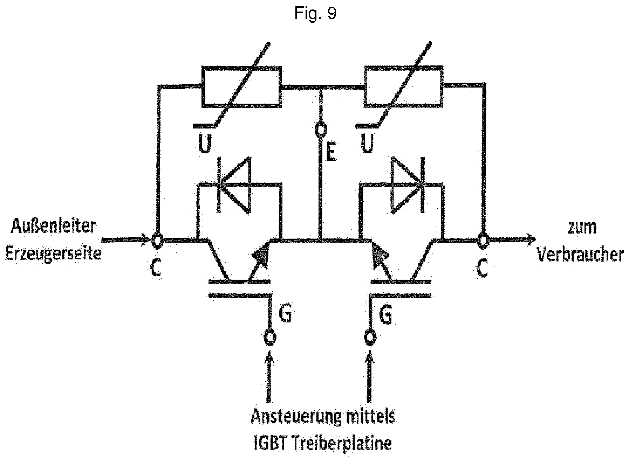

Zu beachten ist, daß hier und im folgenden mit dem Begriff "Abschaltung" nicht nur die Trennung des Synchrongenerators vom Stromnetz gemeint ist, sondern auch die Zuschaltung mindestens eines geeigneten Verbrauchers zur Aufnahme des Stromstoßes als "Abschaltung" verstanden wird. In diesem Sinne steht "Abschaltung" auch synonym für "Ableitung des Überschusstromes". Ein oder mehrere geeignete Verbraucher können beispielsweise ausreichend dimensionierter Widerstände sein, die dann - in dem Fachmann an sich bekannter Art und Weise - den in Fig. 9 beispielhaft gezeigten Varistoren parallel geschaltet werden.

Die Erfindung umfasst weiterhin eine Abschaltvorrichtung, die in jeder Phase des Stromnetzes mindestens zwei antiparallel zueinander angeordnete Halbleiterschaltelemente aufweist. Bei den antiparallel zueinander angeordneten oder "verschalteten" Halbleiterschaltelementen handelt es sich bevorzugt um IGBT's ("**I**nsulated **G**ate **B**ipolar **T**ransistors"), um sicherzustellen, dass die auftretenden Stromflüsse sicher blockiert werden können, ohne dass die betreffenden Halbleiterschaltelemente dabei übermäßig beschädigt werden. Dies stellt die erwünschte Wiedereinschaltfähigkeit der Erfindung sicher, da die Halbleiterschaltelemente dann zwei oder mehr Schaltvorgänge ausführen können, bevor sie evtl. aufgrund von Sicherheits-/Normanforderungen u. U. ausgetauscht werden müssen. Fig. 2A zeigt ein Schaltbild einer derartigen erfindungsgemäßen Bauteil-Anordnung bzw. Verschaltung. Alternativ zur Auswahl von Halbleiterschaltelementen, die die auftretenden Stromstöße sicher zumindest weitgehend unbeschadet überstehen, ist es ebenfalls erfindungsgemäß, jeweils mehrere an sich jeweils zu schwache antiparallel verschaltete Halbleiterschaltelemente parallel in einen oder mehrere Strompfade der Netzphase einzubringen, so dass jedes einzelne Halbleiterschaltelement nur einen Teilbetrag des gesamten Stromstoßes aushalten muß. Abb. 2B zeigt beispielhaft ein entsprechendes Schaltbild bezüglich einer Phase. Es fällt in den Umfang der Erfindung, eine derartige parallele Anordnung von jeweils wenigstens zwei antiparallel zueinander im betreffenden Strompfad verschalteten Halbleiterschaltelementen in einer oder in mehreren Phasen des Stromnetzes vorzusehen.

Unter einer antiparallelen Anordnung oder Verschaltung von zwei Halbleiterschaltelementen wird hierbei verstanden, dass beispielsweise bei Verwendung von IGBT's die beiden Emitter-Anschlüsse miteinander verbunden werden, und der Kollektor-Anschluß des einen IGBT mit der betreffenden Phase des Erzeugers (Generator) verbunden wird, sowie der Kollektor-Anschluß des anderen IGBT mit der betreffenden Phase des Verbrauchers (Stromnetz). Über die Gate-Anschlüsse erfolgt die Ansteuerung der beiden IGBTs.

Die Überwachung der einzelnen Ströme in den Netzphasen, bzw. ggf. in den einzelnen Strompfaden der einzelnen Netzphasen, erfolgt beispielsweise mit Strommesstrafos oder über die Bestimmung des Spannungsabfalls über den Halbleiterschaltelementen. Die Erfassung der Ströme und die daraus im Bedarfsfalle folgende Auslösung (Abschaltung, Öffnung) der Schalter ist erfindungsgemäß so schnell, dass die Verzögerung infolge des Zeitbedarfs für die Stromerfassung und die Schaltung deutlich weniger als 1 $\mu$s beträgt. Bevorzugt beträgt die Verzögerung maximal 600 ns, weiter bevorzugt beträgt sie maximal 300 ns und ganz besonders bevorzugt beträgt sie maximal 100 ns. Dadurch wird der an das Netz abgegebene Kurzschlußstrom auf den Nennstrom begrenzt. Es treten keine mechanischen Belastungen auf. Es ist nicht erforderlich, dass die Halbleiterschaltelemente (z. B. IGBTs oder MOSFETs) den Kurzschlußstrom tragen müssen, da sie bereits in der Anstiegsflanke des Stoßkurzschlußstromes geschaltet, d.h. "geöffnet", werden, so daß kein Strom mehr fließt.

Fehlauslösungen, d. h. die Unterdrückung des Stromflusses und/oder das Auslösen einer vollständigen Abschaltung, ohne daß wirklich ein kritischer Stromstoß stattfand, sind im Gegensatz zu $I_s$-Begrenzern unproblematisch, da der Schalter verschleißfrei arbeitet (keine neue Sprengkapsel bzw. Austausch der Vorrichtung erforderlich), und nach Überprüfung des Netzzustandes wieder zugeschaltet (eingeschaltet) werden kann, bzw. sich automatisch selbst wieder zuschaltet.

Die Vorrichtung umfasst somit:

- Mindestens einen bidirektionalen Halbleiterschalter;
- Mindestens eine Teilvorrichtung zur Erfassung und Auswertung des Stromes, bzw. je eine Teilvorrichtung zur Erfassung und eine weitere Teilvorrichtung zur Auswertung des Stromes;
- Mindestens ein einstellbares oder fest vorgegebenes Verzögerungsglied, d.h. eine einstellbare oder fest vorgegebene Zeitspanne als "Reaktionszeit" für die Erkennung des Fehlerfalles (Stoßkurzschlußstrom) einerseits, sowie die Reaktion darauf andererseits. Fest vorgegeben kann dieses Verzögerungsglied beispielsweise sein durch die bauartbedingten Schaltzeiten der verwendeten elektrischen Bauteile, so daß die Auswahl der elektrischen Bauteile, insbesondere der Halbleiterschaltelemente und der Operationsverstärker mit geeigneten Ansprechzeiten eine unveränderliche Reaktionszeit vorgibt. Hierbei handelt es sich um eine hardwarebedingte analoge Auswertung. Einstellbar wird ein analoges, bauartbedingtes Zeitglied beispielsweise indem einstellbare analoge Bauteile wie etwa einstellbare Kondensatoren, z. B. Trimmkondensatoren, Drehkondensatoren in RC-Gliedern oder einstellbare Induktivitäten (Spulen) in RL-Gliedern verwendet werden, und/oder einstellbare Widerstände, etwa Trimmkondensatoren sowohl in RC- als auch in RL-Gliedern. Einstellbar wird dieses Verzögerungsglied weiterhin, indem eine programmierbare Mikrokontroller-Steuerung vorgesehen wird, beispielsweise basierend auf einem **F**ield **P**rogrammable **G**ate **A**rray (FPGA) oder einem **C**omplex **P**rogrammable **L**ogic **D**evice (CPLD), mit Hilfe derer die Reaktionszeit durch entsprechende Steuerpulse an die elektronischen Bauteile verlängert werden kann. Diese Verlängerung der Reaktionszeit kann sowohl fest einprogrammiert werden als auch in Abhängigkeit von der aktuellen Netzsituation dieser angepasst werden. Die Einstellbarkeit dieses Verzögerungsgliedes, d. h. der Reaktionszeit der Halbleiter-Abschaltvorrichtung, ermöglicht es, die Vorrichtung so an das jeweilige Stromnetz anzupassen, dass andere Netzstörungen, beispielsweise sogenannte "powerline communications" nicht fehlinterpretiert werden. Im Gegensatz zur hardwarebedingten analogen Auswertung handelt es sich hierbei um eine programmgesteuerte digitale Auswertung. Die einstellbaren Zeitspannen liegen bevorzugt im Mikrosekunden-Bereich.

- Mindestens eine Schalteinheit, d.h. ein lokales Steuerungsmodul ("Eigensteuerung") für die erfindungsgemäße Abschaltvorrichtung, basierend beispielsweise auf Treiberplatinen für die Halbleiterschaltelemente und/oder auf frei programmierbaren Mikroprozessoren und/oder speziell gefertigten ASIC's (application specific integrated circuit). Damit wird ermöglicht, daß das über die erfindungsgemäße Vorrichtung angeschlossene BHKW sich im Bedarfsfalle auch selbst vom Stromverteilungsnetz trennen kann.
- Optional mindestens ein Kommunikationsmodul zur Kommunikation mit mindestens einer übergeordneten Steuerung. Sofern eine Kommunikation mit einer übergeordneten Netzsteuerung vorgesehen werden soll, ist als Mindest-Anforderung für diese Kommunikation eine Ein-Kanal-Verbindung vorzusehen, mit der wenigstens ein Signal mit zwei Pegeln (high/low) von der übergeordneten Steuerung vorgegeben werden kann, um das An- und Abschalten durch die übergeordnete Steuerung ermöglichen zu können. Zur Erweiterung der Funktionalität ist es vorteilhaft, wenn das Kommunikationsmodul einen detaillierteren Datenaustausch, auch bidirektional (Voll-Duplex) ermöglicht, beispielsweise in Form eines Bussystems wie beispielsweise I$^2$C, CAN, oder einem anderen dem Fachmann bekannten Bussystem.

Die erfindungsgemäße Abschaltvorrichtung (die "Vorrichtung") ist sowohl in Niederspannungs-, als auch in Mittelspannungs- und Hochspannungsnetzen einsetzbar, die mit Wechselspannung (mehrphasig, bevorzugt dreiphasig) betrieben werden. Bevorzugt wird sie in Nieder- und Mittelspannungsnetzen im Spannungsbereich von 230 V bis 50 kV eingesetzt, und ganz besonders bevorzugt jedoch in Niederspannungsnetzen bis 690 V. Der besonders bevorzugte Einsatz in Niederspannungsnetzen resultiert daraus, daß sich Netzinstabilitäten in Niederspannungsnetzen infolge Zuschaltung von BHKWs besonders nachteilig auf eng vermaschte Mittelspannungsnetze auswirken, die mit ca. 10 kV betrieben werden, wie sie etwa in Großstädten oder eng bebauten ländlichen Gegenden betrieben werden. Dies gilt ebenfalls für die Erweiterung des Gegenstands der Erfindung, nämlich die Ausgestaltung als Strombegrenzungsvorrichtung.

Zusammenfassend läßt sich der Gegenstand der Erfindung wie folgt beschreiben:

Der Gegenstand der Erfindung umfasst daher insgesamt folgende Möglichkeiten der Gewinnung (Berechnung) und Auswertung des "Summensignals" (nachfolgend "Auswertungsvarianten" genannt), die bei Überschreitung des "Grenzwertes" zur Unterdrückung des Stoßkurzschlußstromes führen:

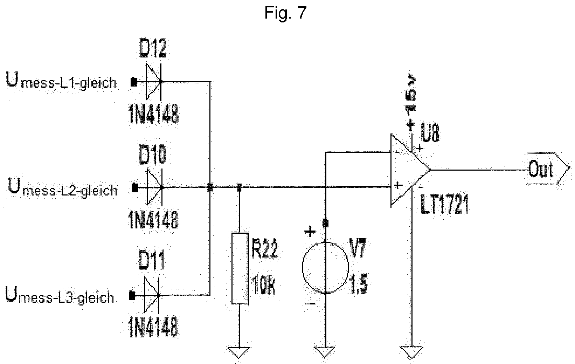

- Auswertungsvariante 1: Ermittlung und Auswahl des Maximalwertes des Stromes (bzw. des dem Strom entsprechenden phasenspezifischen Einzelmesswertes $U_{mess-L(x)}$ (mit $1 \leq x \leq n$)) in den n Phasen, beispielsweise mittels Gleichrichtung in jeder Phase, wobei der größte Wert "durchgelassen", d.h. weitergeleitet wird und das Summensignal bildet, und Vergleich dieses Summensignals mit dem gewählten Grenzwert; diese Variante entspricht dem Ausführungsbeispiel gemäß Fig. 7.
- Auswertungsvariante 2: Ermittlung der Ströme in den n Phasen (bzw. der den Strömen entsprechenden phasenspezifischen Einzelmesswerte $U_{mess-L(1)}$ bis $U_{mess-L(n)}$) und Vergleich mit den gewählten phasenspezifischen Grenzwerten, die wie vorstehend beschrieben unter dem Begriff "Grenzwert" "zusammengefasst" sind, bzw. von ihm umfasst werden, wobei das Summensignal bei dieser Auswertungsvariante aus den einzelnen phasenspezifischen Vergleichen mit den phasenspezifischen Grenzwerten resultiert.
- Auswertungsvariante 3: Ermittlung der Ströme in den n Phasen (bzw. der den Strömen entsprechenden phasenspezifischen Einzelmesswerte $U_{mess-L(1)}$ bis $U_{mess-L(n)}$) und Bildung des Summensignals durch Aufsummierung der phasenspezifischen Einzelmesswerte sowie Vergleich dieses Summensignals mit dem gewählten Grenzwert.
- Auswertungsvariante 4: Bildung der Beträge der Ströme in den n Phasen (bzw. der den Strömen entsprechenden phasenspezifischen Einzelmesswerte $U_{mess-L(1)}$ bis $U_{mess-L(n)}$) und Verwendung dieser vorzeichenunabhängigen Werte anstelle der vorzeichenbehafteten realen Stromflüsse (bzw. phasenspezifische Einzelmesswerte) entsprechend der unter den vorstehenden Spiegelstrichen offenbarten Auswertungsvarianten.

Alle genannten Auswertungsvarianten haben gemeinsam, dass durch sie erkannt wird, wenn der Stromfluß zu hoch wird, d.h. ein Stoßkurzschlußstrom auftritt. Auch die für die Realisierung der verschiedenen Auswertungsvarianten erforderlichen Bauteile sind im wesentlichen die gleichen, sie werden jedoch jeweils in anderer Art und Weise angeordnet, was dem Fachmann an sich geläufig ist. Hinsichtlich Strommessung handelt es sich dabei beispielsweise um Messwiderstände, Messtransformatoren, Hallsonden, interne Widerstände von Bauteilen usw.; bezüglich Auswertung handelt es sich beispielsweise um Operationsverstärker, Logikschaltungen, FPGA, CPLD, Prozessoren usw.

Bei den nichtmechanischen Schaltelementen handelt es sich um sogenannte "aktive" bzw. "ansteuerbare" Halbleiterbauteile wie beispielsweise Thyratrons oder Halbleiterschaltelemente, wie zum Beispiel IGBTs und MOSFETs. Der in Schritt c) genannte Grenzwert des Summensignals $U_{mess-sum}$ wird erfindungsgemäß frei gewählt, je nach Anforderung an die Netzstabilität; insbesondere fällt es auch in den Umfang der Erfindung sowie ihrer Äquivalente, diesen Grenzwert je nach Erfordernis anzupassen, also neu festzusetzen.

Der Gegenstand der Erfindung umfasst weiterhin eine Vorrichtung, die dadurch gekennzeichnet ist, dass die Vorrichtung

- in jedem Strompfad einer jeden Phase mindestens zwei nichtmechanische Schaltelemente aufweist, die unabhängig voneinander ausgewählt sind aus

    der Liste umfassend Leistungstransistoren und Thyratrons, sowie mindestens zwei Dioden, wobei die nichtmechanischen Schaltelemente und die Dioden in jedem Strompfad einer jeden Phase

jeweils antiparallel zueinander verschaltet sind;

- eine Messvorrichtung aufweist zur zeitlichen Messung des Stromflusses in jeder Phase $L_1$ bis $L_n$ der Einspeiseleitung zur Gewinnung von n phasenspezifischen, den Stromflüssen proportionalen, Einzelmeßwerten $U_{mess-L(1)}$ bis $U_{mess-L(n)}$, wobei diese Messvorrichtung zur Messung des Stromverlaufs Stromwandler und Meßwiderstände umfasst;
- eine Berechnungsvorrichtung aufweist zur Berechnung mindestens eines Summensignals $U_{mess-sum}$ ;
- eine Auswertungsvorrichtung aufweist, die aus dem

  Summensignal $U_{mess-sum}$
  durch Vergleich mit dem Grenzwert mindestens ein Steuersignal erzeugt zur Steuerung der mindestens zwei nichtmechanischen Schaltelemente pro Strompfad einer jeden Phase, wobei diese Auswertungsvorrichtung mindestens einen Widerstand, eine Referenzspannungsquelle und einen Komparator umfasst;

- eine Steuerung aufweist, die mindestens einen 1-Bit Fehlerspeicher umfasst und
- mindestens ein einstellbares Verzögerungsglied aufweist.

Die Berechnungsvorrichtung zur Berechnung des Summensignals $U_{mess-sum}$ kann dieses Summensignal $U_{mess-sum}$ auf unterschiedliche Arten berechnen, und zwar durch

i) die Ermittlung und Auswahl des Maximalwertes unter den n phasenspezifischen Einzelmesswerten $U_{mess-L(1)}$ bis $U_{mess-L(n)}$ aus der Messvorrichtung, wobei die Berechnungsvorrichtung Bauteile umfasst, unabhängig

  voneinander ausgewählt aus der Liste umfassend
  Messwiderstände, Messtransformatoren, Hallsonden, Operationsverstärker, Logikschaltungen, FPGA, CPLD, Prozessoren,
  und/oder

ii) den Vergleich der n phasenspezifischen Einzelmesswerte $U_{mess-L(1)}$ bis $U_{mess-L(n)}$ aus der Messvorrichtung mit den jeweils korrespondierenden phasenspezifischen Grenzwerten,

  wobei die Berechnungsvorrichtung
  Bauteile umfasst, unabhängig
  voneinander ausgewählt aus der Liste umfassend Messwiderstände, Messtransformatoren, Hallsonden, Operationsverstärker, Logikschaltungen, FPGA, CPLD, Prozessoren,
  und/oder

iii) die Gleichrichtung der Einzelmeßwerte $U_{mess-L(1)}$ bis $U_{mess-L(n)}$, aus der Messvorrichtung, wobei die Berechnungsvorrichtung für die Gleichrichtung von Einzelmeßwerten Widerstände, Dioden und Operationsverstärker

  sowie eine untergeordnete Teilvorrichtung $T_B$ umfasst zur Zusammenführung der gleichgerichteten Einzelmeßwerte $U_{mess-L(1)-gleich}$ bis $U_{mess-L(n)-gleich}$ zu einem Summensignal $U_{mess-sum}$, das proportional zum gesamten Stromfluß in der Einspeiseleitung ist, wobei diese untergeordnete Teilvorrichtung $T_B$ zur Zusammenführung der gleichgerichteten Einzelmeßwerte je mindestens eine Diode in jeder Eingangsleitung eines gleichgerichteten Einzelmeßwertes $U_{mess-L(1)-gleich}$ bis $U_{mess-L(n)-gleich}$ zur Entkopplung der einzelnen gleichgerichteten Einzelmeßwerte voneinander umfasst,
  und/oder

iv) die Bildung der Beträge $|U_{mess-L(1)}|$ bis $|U_{mess-L(n)}|$ der Einzelmesswerte $U_{mess-L(1)}$ bis $U_{mess-L(n)}$ aus der Messvorrichtung und die Verwendung dieser vorzeichenunabhängigen Werte $|U_{mess-L(1)}|$ bis $|U_{mess-L(n)}|$ anstelle der vorzeichenbehafteten realen Einzelmesswerte $U_{mess-L(1)}$ bis $U_{mess-L(n)}$ aus der Messvorrichtung in allen Ausgestaltungen i) oder ii) oder iii) dieser Berechnungsvorrichtung, wobei diese Berechnungsvorrichtung

  Bauteile umfasst, unabhängig
  voneinander ausgewählt aus der Liste umfassend Messwiderstände, Messtransformatoren, Hallsonden, Operationsverstärker, Logikschaltungen, FPGA, CPLD, Prozessoren,

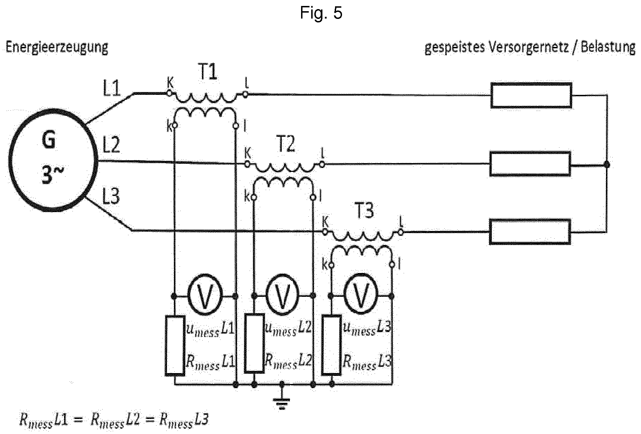

Jeweils ein Beispiel für eine der vorstehend genannten Teilvorrichtungen kann den Abbildungen Fig. 5 bis Fig. 7 entnommen werden, und zwar sei:

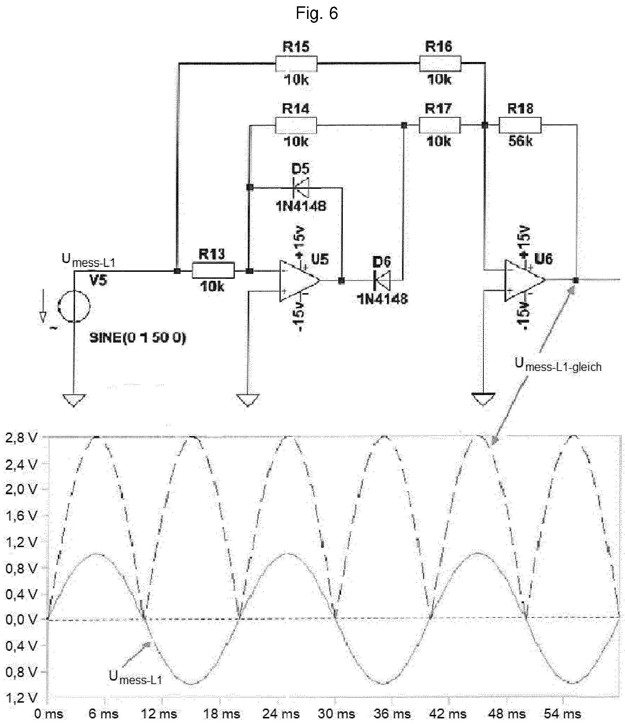

- für die erste Teilvorrichtung, d.h. die Messvorrichtung, beispielhaft auf Fig. 5 verwiesen,
- für die zweite Teilvorrichtung, d. h. die Berechnungsvorrichtung, beispielhaft auf Fig. 6 verwiesen,
- für die dritte Teilvorrichtung, d. h. die Teilvorrichtung $T_B$ der Berechnungsvorrichtung gemäß Ausführungsvariante iii) beispielhaft auf die linke Hälfte von Fig. 7 verwiesen, und
- für die vierte Teilvorrichtung, d. h. die Auswertevorrichtung, beispielhaft auf die rechte Hälfte von Fig. 7 verwiesen.

Bei der Steuerung handelt es sich beispielsweise um sog. Steuerplatinen für das jeweilige nichtmechanische Steuerelement oder geeignete, ggf. programmierbare, Mikroprozessoren oder Computer oder Industriesteuerungen wie beispielsweise SPS, SPSS oder ähnlichen dem Fachmann bekannten Vorrichtungen. Das einstellbare Verzögerungsglied ergibt sich - in dem Fachmann bekannter Weise - durch die Auswahl der Bauelemente für die erfindungsgemäße Vorrichtung aus den Betriebsparametern, insbesondere den Schaltzeiten, der Bauelemente oder - ebenfalls in dem Fachmann bekannter Weise - durch geeignete Programmierung entsprechender programmierbarer Bauelemente, wie sie - wenn auch nicht erschöpfend - beispielhaft vorstehend ebenfalls bereits genannt sind.

Der Gegenstand der Erfindung umfasst weiterhin eine Vorrichtung zur Durchführung des Verfahrens wie es vorstehend beschrieben ist, und die dadurch gekennzeichnet ist, dass die Vorrichtung vorsorglich zusätzlich eine Sicherung aufweist, wobei dem Fachmann bekannt ist, welche Art und Stärke von Sicherung geeignet ist, und wie sie in die Verschaltung einzubauen ist.

Der Gegenstand der Erfindung umfasst weiterhin die Verwendung einer Vorrichtung wie vorstehend beschrieben in einem Mittelspannungs-Stromnetz oder in einem Niederspannungs-Stromnetz zur Unterdrückung von Stoßkurzschlußströmen während der Anlaufphase von mindestens einem an das Mittelspannungs- oder Niederspannungs-Stromnetz angeschlossenen Synchrongenerator.

Neben der vorstehend zusammenfassend beschriebenen Ausgestaltung des Gegenstands der Erfindung als Halbleiter-Abschaltvorrichtung weist der Gegenstand der Erfindung in der Ausgestaltung als Halbleiter-Strombegrenzungsvorrichtung unter anderem nachfolgend beschriebene Merkmale auf, wobei die zuvor beschriebenen Verfahrens- und Verwendungsvarianten der Halbleiter-Abschaltvorrichtung auch für die Erfindung in der Ausgestaltung als Halbleiter-Strombegrenzungsvorrichtung Geltung haben, d.h. beide Ausgestaltungen des Gegenstands der Erfindung - Halbleiter-Abschaltvorrichtung und Halbleiter-Strombegrenzungsvorrichtung - sind miteinander kombinierbar.

In allgemeiner grundlegender Form umfasst der Gegenstand der Erfindung als Vorrichtung zunächst zumindest eine Vorrichtung zur Kontrolle von Stoßkurzschlußströmen in Stromversorgungsnetzen, die dadurch gekennzeichnet ist, dass die Vorrichtung

- in jedem Strompfad einer jeden Phase mindestens zwei

  nichtmechanische Schaltelemente aufweist, die unabhängig voneinander ausgewählt sind aus der Liste umfassend Leistungstransistoren und Thyratrons, sowie mindestens zwei Dioden, wobei die nichtmechanischen Schaltelemente und die Dioden in jedem Strompfad einer jeden Phase jeweils antiparallel zueinander verschaltet sind;

- eine Messvorrichtung aufweist zur zeitlichen Messung des Stromflusses in jeder Phase $L_1$ bis $L_n$ der Einspeiseleitung zur Gewinnung von n phasenspezifischen, den Stromflüssen proportionalen, Einzelmeßwerten $U_{mess-L(1)}$ bis $U_{mess-L(n)}$, wobei diese Messvorrichtung zur Messung des Stromverlaufs Stromwandler und Meßwiderstände umfasst;
- eine Berechnungsvorrichtung aufweist zur Berechnung mindestens eines Summensignals $U_{mess-sum}$ ;
- eine Auswertungsvorrichtung aufweist, die aus dem

  Summensignal $U_{mess-sum}$
  durch Vergleich mit dem Grenzwert mindestens ein Steuersignal erzeugt zur Steuerung der mindestens zwei nichtmechanischen Schaltelemente pro Strompfad einer jeden Phase, wobei diese Auswertungsvorrichtung mindestens einen Widerstand, eine Referenzspannungsquelle und einen Komparator umfasst;

- eine Steuerung aufweist, die mindestens einen 1-Bit Fehlerspeicher umfasst und
- mindestens ein einstellbares Verzögerungsglied aufweist.

Der Gegenstand der Erfindung umfasst weiterhin eine Vorrichtung zur Kontrolle von Stoßkurzschlußströmen in Stromversorgungsnetzen wie im vorstehenden Absatz beschrieben, die dadurch gekennzeichnet ist, dass die Vorrichtung weiterhin

- mindestens einen Prozessor oder einen FPGA oder eine analoge Steuerschaltung aufweist, sowie
- mindestens eine Spule **(30)** mit definierter Induktivität in jeder Phasenleitung aufweist, wobei diese mindestens eine Spule **(30)** in jeder Phasenleitung zwischen dem bidirektionalen Halbleiterschalter **(10, 10')** und dem externen Netz befindlich ist.

Der Gegenstand der Erfindung umfasst weiterhin eine Vorrichtung zur Kontrolle von Stoßkurzschlußströmen in Stromversorgungsnetzen wie im vorstehenden Absatz beschrieben, die dadurch gekennzeichnet ist, dass die Vorrichtung weiterhin mindestens einen weiteren zusätzlichen bidirektionalen Halbleiterschalter **(40, 40')** aufweist, der entweder zwischen jeweils zwei Phasen oder zwischen jeweils einer Phase und dem Nullleiter befindlich ist, und wobei es sich bei den diesen mindestens einen zusätzlichen bidirektionalen Halbleiterschalter bildenden Halbleiterschaltelementen um Halbleiterschaltelemente handelt, ausgewählt aus der Liste umfassend IGBTs, MOSFETs, Thyratrons.

Der Gegenstand der Erfindung umfasst weiterhin eine Vorrichtung zur Kontrolle von Stoßkurzschlußströmen in Stromversorgungsnetzen wie weiter oben beschrieben, dadurch gekennzeichnet, dass die Vorrichtung weiterhin mindestens einen weiteren zusätzlichen bidirektionalen Halbleiterschalter **(40, 40')** aufweist, der einen Freilaufpfad zu einer anderen Phase oder zu dem Nulleiter ermöglicht.

### Ausführungsbeispiele

Nachfolgend werden zunächst beispielhaft die Berechnungen für den Bau einer Ausführungsvariante für ein dreiphasiges 20 kVA Drehstromnetz beschrieben. Die Kontaktierung, Einhausung und der Anschluß der Vorrichtung zur Durchführung des Verfahrens erfolgt gemäß im Stand der Technik bekannter Verfahren und Auswahlkriterien ohne dabei den Umfang der Erfindung oder ihrer Äquivalente zu verlassen. Geeignete Verfahren zur Kontaktierungsverfahren sind z. B. Schweissen, Bonden, Löten, Verklemmen oder Verschrauben. Dies gilt analog auch für die Ausführung der Vorrichtung in der Ausgestaltung als Strombegrenzungsvorrichtung.

Weiterhin werden die Ergebnisse von in einem Hochspannungslabor durchgeführten Versuchen unter Verwendung verschiedener Ausführungsvarianten der Erfindung dargestellt.

### Kurzschlussversuch zur beispielhaften experimentellen Ermittlung eines Kurzschlußstromes

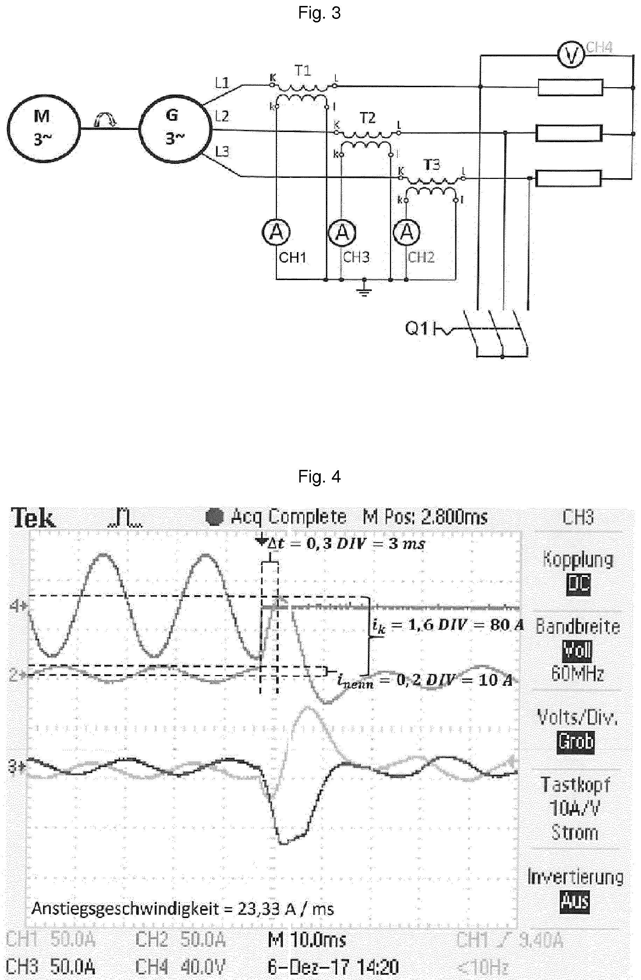

Ein Generator mit 3,8 kVA Leistung wird unter Verwendung von ohmschen Hochleistungswiderständen mit Nennstrom belastet. In dieser Betriebssituation wird ein allphasiger Kurzschluss herbeigeführt und die dabei auftretenden Stromverläufe werden mittels LEM-Wandler erfasst und durch ein digitales Speicheroszilloskop vom Typ Tektronix TDS2002B bildlich dargestellt (vgl. Fig. 3). Fig. 4 zeigt beispielhaft ein aufgenommenes und ausgewertetes Oszillogramm. Die abgebildeten Verläufe stellen den höchsten, in mehreren Durchläufen ermittelten Kurzschlussstrom $I_k$ dar. Der aufgetretene Peak hat den abgelesenen und markierten Wert von 8 • $I_{nenn}$ zu keinem Zeitpunkt überschritten. Daher wird dieses Verhältnis von $I_k$ / $I_{nenn}$ als Maximalwert für alle weiteren nachfolgenden beispielhaften Kalkulationen herangezogen.

### Auswahl und Dimensionierung der Leistungshalbleiter (IGBT, Dioden)

Beispielhaft ergeben sich für ein dreiphasiges 20 kVA Drehstromnetz mit 120° Phasenverschiebung (Verkettungsfaktor √3) folgende Werte für Leistung P (Gl. 1) und Nennstrom $I_{nenn}$ (Gl. 2):

$$P = \sqrt{3} * U * I \qquad\qquad (\text{Gl. 1})$$

$$I_{nenn} = \frac{P}{\sqrt{3} * U} = \frac{20000 \text{ VA}}{\sqrt{3} * 400 \text{ V}} \approx 28{,}87 \text{ A} \qquad (\text{Gl. 2})$$

Unter Berücksichtigung des wie oben beschrieben beispielhaft ermittelten Kurzschlußstromes von etwa dem achtfachen des Nennstromes ergibt sich die mindestens erforderliche kurzzeitige Stromtragefähigkeit der zu verwendenden Halbleiterbauteile (z. B. IGBTs oder MOSFETs) gemäß Gl. 3 im vorliegenden Beispiel zu:

$$I_{k\,max} = 8 * I_{nenn} = 8 * 28{,}87 \text{ A} = 230{,}96 \text{ A} \qquad (\text{Gl. 3})$$

Unter Beachtung dieser Überlegungen kann der Fachmann anhand der zu allen handelsüblichen Halbleiterbauteilen (z. B. IGBTs oder MOSFETs) erhältlichen Datenblätter geeignete Halbleiterbauteile auswählen, die verwendet werden können, um die erfindungsgemäße Vorrichtung zu bauen. Dies gilt analog zu den Halbleiterschaltelementen in entsprechender Form auch für die sonstigen für die Vorrichtung in den verschiedenen Ausführungsformen zu verwendenden Halbleiterbauteile und sonstigen elektronischen Bauteile.

Erfindungsgemäß werden die Halbleiterschaltelemente im ungetakteten Durchlassbetrieb verwendet. Dabei sind beispielsweise die folgenden Kenndaten relevant, wobei diese Auflistung nicht als einschränkend zu verstehen ist:

- $V_{CES}$ [V] maximal zulässige Kollektor-Emitter Spannung
- $I_C$ [A] maximal zulässiger Kollektor Dauerstrom
- $I_{CRM}$ [A] maximal zulässiger, zeitlich begrenzter Kollektorstrom
- $T_{vjmax}$ [°C] maximal zulässige Halbleiterkerntemperatur
- $V_{CE(sat)max}$ [V] Kollektor-Emitter Spannungsfall bei voller Durchsteuerung
- $R_{th(j-c)}$ [°C/(kW)] Wärmeübergangswiderstand Halbleiterkern - IGBT Gehäuse
- $R_{th(c-h)}$ [°C/(kW)] Wärmeübergangswiderstand IGBT Gehäuse - Kühlkörper

Beispielhaft seien in Tabelle 1 zwei kommerziell erhältliche Halbleiterschaltelemente (IGBTs) mit ihren entsprechenden Kenndaten genannt, die für die erfindungsgemäße Vorrichtung verwendet werden können. Die genannten Auswahlkriterien für die Leistungshalbleiter gelten analog und beispielhaft auch für die Ausgestaltung des Gegenstands der Erfindung als Halbleiter-Strombegrenzungsvorrichtung.

Tabelle 1: erfindungsgemäß beispielhaft einsetzbare Halbleiterschaltelemente

| Hersteller | Semikron® | Fujielectric® |
|---|---|---|
| IGBT-Modell | SKM300GA12E4 | 1MBI200HH-120L50 |
| $V_{CES}$ | 1200 V | 1200 V |
| Ic / $I_{CRM}$ | 300 A / 900 A | 200 A / 400 A [*)] |
| $V_{CE(sat)max}$ | 2,45 V | 4,15 V |
| $T_{vjmax}$ | 175 °C | 150 °C |
| $R_{th(j-c)}$ | 0,11 °C/W | 0,067 °C/W |
| [*)] jeweils bei 80 °C | | |

Die Verlustleistung pro Halbleiterschaltelement (IGBT) bei Maschinennennlast berechnet sich nach der Formel Gl. 4:

$$P_{Vnenn} = I_{nenn} * V_{CEsat(max)} \qquad (Gl. 4)$$

Für das vorliegende Ausführungsbeispiel mit einer 20 kVA-Maschine (28,87 A) ergeben sich somit für den obengenannten Semikron-IGBT (nachfolgend "Semi" abgekürzt/indiziert) 70,73 W und für den Fujielectric-IGBT (nachfolgend "Fuji" abgekürzt/indiziert) 119,81 W Verlustleistung. Für den Fachmann ist ohne weiteres ersichtlich, dass ein hoher Wert für $V_{CEsat(max)}$ eine hohe, als Wärme abzuführende Verlustleistung nach sich zieht, so dass Halbleiterschaltelemente mit einem niedrigen Wert für $V_{CE(sat)max}$ besonders bevorzugt sind. In diesem Beispiel beträgt die Verlustleistung 0,6 % der Generator-Nennleistung pro IGBT. Da pro Phase mindestens zwei antiparallel zueinander angeordnete IGBTs erforderlich sind, beträgt die Gesamt-Verlustleistung in diesem Beispiel eines dreiphasigen Netzanschlusses ca. 3,6 % der Generator-Nennleistung.

Für die Auswahl eines geeigneten IGBTs ist auch die Betrachtung der Betriebstemperaturen bei unterschiedlichen Betriebszuständen relevant, die wie folgt beispielhaft vorgenommen wird (der Wärmewiderstand $R_{th}$ wird hierbei und im weiteren ggf. auch mit "Ww" abgekürzt):

Zunächst werden die voraussichtlichen Umgebungsbedingungen, Betriebs- und Auslöseparameter festgelegt bzw. bestimmt:

- Umgebungstemperatur: 55 °C
- Passive Kühlung mittels Kühlkörper: 0,5 K/W
- Verwendung von Wärmeleitpaste: 0,007 K/W
- Die Auslösung (Abschaltung) soll bei Erreichen des Schwellenwertes von (2,5 bis 3) * $I_{nenn}$ sicher erfolgen; dies ist gemäß Fig. 4 nach 1 ms der Fall.

- die relevanten Werte für $R_{th(j-c)}$ im jeweiligen "Auslösefall", d.h. demjenigen Zeitpunkt/Stromfluß, bei dem die Netztrennung erfolgen soll, werden der Kennlinie des transienten Wärmewiderstandes im Datenblatt des Halbleiterbausteins entnommen:

  ○

$$R_{th(j-c)}\text{IGBT (1ms)} = 0,01 \,°C/W \text{ (Semi) bzw. } 0,0052 \,°C/W \text{ (Fuji)}$$

  ○

$$R_{th(j-c)}\text{IGBT (9ms)} = 0,035 \,°C/W \text{ (Semi) bzw. } 0,02 \,°C/W \text{ (Fuji)}$$

Die eigentliche Berechnung des Wärmewiderstandes erfolgt gemäß der Formel Gl. 5,

$$\text{Gesamt Ww} = \text{Ww IGBT} + \text{Ww Leitpaste} + \text{Ww Kühlkörper} \quad \text{(Gl. 5)},$$

$$R_{thges} = R_{th(j-c)} + R_{thL} + R_{thK} = R_{th(j-c)} + 0,007 \,K/W + 0,5 \,K/W \quad \text{(Gl. 5.1)},$$

$$\text{mit } R_{thges(Semi)} = 0,617 \,K/W \quad \text{und} \quad R_{thges(Fuji)} = 0,574 \,K/W.$$

Die Betriebstemperaturen in den einzelnen Betriebsphasen der beispielhaft ausgewählten IGBT's ergeben sich damit wie folgt:

$$T_{Chip(Semi)} = 0,617 \,K/W \,*\, 70,73 \,W + 55 \,°C = 98,64 \,°C \quad \text{(Gl. 6.1)}$$

$$T_{Chip(Semi)} = 0,01 \,K/W \,*\, 70,73 \,W \,*\, 3 + 98,64 \,°C = 100,76 \,°C \quad \text{(Gl. 6.2)}$$

$$T_{Chip(Semi)} = 0,035 \,K/W \,*\, 70,73 \,W \,*\, 8 + 98,64 \,°C = 118,44 \,°C \quad \text{(Gl. 6.3)}$$

$$T_{Chip(Fuji)} = 0,574 \,K/W \,*\, 119,81 \,W + 55 \,°C = 123,77 \,°C \quad \text{(Gl. 7.1)}$$

$$T_{Chip(Fuji)} = 0,0052 \,K/W \,*\, 119,81 \,W \,*\, 3 + 123,77 \,°C = 125,64 \,°C \quad \text{(Gl. 7.2)}$$

$$T_{Chip(Fuji)} = 0,02 \,K/W \,*\, 119,81 \,W \,*\, 8 + 123,77 \,°C = 142,94 \,°C \quad \text{(Gl. 7.3)}$$

Die betreffenden Werte sind in Tabelle 2 nochmals einander gegenübergestellt.

Tabelle 2: Beispielhafte Betriebstemperaturen

| Betriebszustand | Semikron | Fujielectric |
|---|---|---|
| 20 kVA $P_{nenn}$ (Normalbetrieb) | 98,64 °C | 123,77 °C |
| 20 kVA nach Abschaltung (3x $I_{nenn}$ für 1 ms) | 100,76 °C | 125,64 °C |
| 20 kVA "worst case" (8x $I_{nenn}$ für 9 ms) | 118,44 °C | 142,94 °C |

Der Fachmann erkennt anhand der berechneten Betriebstemperaturen in Tabelle 2 ohne weiteres, dass die Nutzung des Fujielectric®-IGBT's zwar möglich ist, ohne den Umfang der Erfindung oder ihrer Äquivalente zu verlassen, dies aber aufgrund der hohen Betriebstemperaturen weniger vorteilhaft ist, als die Verwendung des Semikron®-IGBT's. Auch der geringe Wärmewiderstand des Fuji-IGBT's reicht nicht aus, um die im Bauteil entstehende Wärme schnell genug abzutransportieren. Schlimmstenfalls kann eine Überschreitung der maximal zulässigen Sperrschichttemperatur $T_{vjmax}$ -

welche bei diesem Typ 150 °C beträgt - nicht mit hinreichender Sicherheit ausgeschlossen werden. Bei Überschreitung dieser Temperatur ist die thermische Zerstörung des IGBT's oder zumindest dessen Schädigung unausweichlich.

In der Ausgestaltung des Gegenstands der Erfindung als Halbleiter-Strombegrenzungsvorrichtung werden weiterhin wenigstens eine Spule (d.h. eine "Induktivität") benötigt sowie ein Prozessor oder ein FPGA oder eine entsprechende analoge Steuerung, womit die Auslösung der Strombegrenzung, d.h. der Einspeisung des definierten Stoß-Kurzschlußstroms bewerkstelligt wird. Optional kann noch wenigstens ein Schalter klassischer Bauart vorgesehen sein. Dem Fachmann sind aus dem Stand der Technik die Berechnungs- und Auswahlmethoden bekannt, die angewendet werden müssen, um die erforderlichen Bauteile erfindungsgemäß auszuwählen. Die dafür erforderlichen Parameter kann der Fachmann in bekannter Weise problemlos den jeweiligen Datenblättern der Bauteile entnehmen.

## Überwachung der Betriebsströme, Überstromerkennung / Grenzwertfestlegung

Die grundsätzlich einzuhaltenden Grenzwerte von Betriebsströmen, Betriebsspannungen, Phasenparametern und anderen für den Betrieb eines Stromverteilungsnetzes erforderlichen Kennwerte, sowie die Definitionen von Überströmen, Unter- und Überspannungen, Fehlersituationen, Betriebszuständen usw. sind dem Fachmann bekannt und können in der jeweils gültigen Form den einschlägigen Normvorschriften entnommen werden, beispielsweise der DIN EN 60909-0:2013-02, der VDE 0102:2013-02, der VDE-AR-N 4105 der VDE-AR-N 4110.

Innerhalb der in den entsprechenden Normvorschriften vorgeschriebenen Grenzen ist es dem Fachmann gestattet, besser geeignete erfindungsgemäße Werte, Grenzwerte, Berechnungsverfahren, Schaltzeiten und andere Parameter auszuwählen und zu verwenden, um die Netzsicherheit zu erhöhen.

Auch die üblicherweise aus dem Stand der Technik bekannten Verfahren zur Netzüberwachung, d.h. der Erkennung von Fehlersituationen / Betriebsstörungen, die erfindungsgemäß verwendet werden können, um anschließend erfindungsgemäße Schalt-/Steuerungs-/Regelungsvorgänge vorzunehmen, sind dem Fachmann bekannt, beispielsweise aus den entsprechenden Normvorschriften.

Die auszuwählende Auslöseschwelle, bzw. der Auslösebereich, muss anhand zweier Zielvorgaben flexibel festgelegt werden. Zum einen dürfen kurze unkritische Lastspitzen, wie Sie beispielsweise beim Zuschalten bzw. bei Einspeisebeginn auftreten, nicht zur Abschaltung führen. Zum anderen soll der im Fehlerfall, also beim Auftreten eines Stoßkurzschlußstromes, real fließende Maximalstrom auf ein Minimum begrenzt werden. Der hier beispielhaft gewählte Kompromiss liegt bei Auslösewerten im Bereich zwischen dem zweieinhalb- bis dreifachen Generatornennstrom.

Der in Fig. 5 dargestellte Messaufbau zeigt beispielhaft einen prinzipiellen Messaufbau zur Echtzeit-Stromwerterfassung. Dem Fachmann sind weitere Vorrichtungen zur Stromüberwachung bekannt, die verwendet werden können, ohne den Umfang der Erfindung oder ihrer Äquivalente zu verlassen. Bei dem beispielhaft beschriebenen Messaufbau werden die fließenden Außenleiterströme, d.h. die Phasenströme in den Phasen L1, L2 und L3, primärseitig mittels Stromwandler (z.B. Strommeßtrafos) T1, T2 und T3 erfasst. Es fällt ebenfalls in den Umfang der Erfindung, anstelle von Strommeßtrafos Meßwiderstände zu verwenden und den Spannungsabfall über diese zu erfassen oder den Innenwiderstand eines oder mehrerer Halbleiterschaltelemente als Meßwiderstand heranzuziehen und darüber den Spannungsabfall zu messen. Dem Fachmann sind dafür geeignete elektronische Schaltungsanordnungen bekannt, die erfindungsgemäß verwendet werden können. Sekundärseitig sind die Wandler über drei identische Widerstände ($R_{mess}$) kurzgeschlossen, welche selbst wiederrum in Stern zueinander verschaltet sind. Dem Fachmann sind der Einsatz sogenannter "Stern-Schaltungen" sowie deren vorteilhafter Einsatz bekannt. Der fließende Wandlerprimärstrom bewirkt einen Wandlersekundärstrom welcher ein festes Übersetzungsverhältnis zum Primärstrom aufweist und die Messwiderstände durchfließt.

Dem Fachmann ist bekannt, daß man prinzipiell nur die Phase abschalten muß, in der man den kritischen Stromstoß detektiert hat, um das Stromnetz vor dem Stoßkurzschlußstrom zu schützen. Des einfacheren Aufbaus der Vorrichtung wegen ist es jedoch bevorzugt, bei Erkennung eines Stoßkurzschlußstromes in einer Phase alle Phasen sowie ggf. auch den Nulleiter (synonym Neutralleiter) zu trennen. Nichtsdestoweniger fällt die Trennung nur derjenigen Phase, in der der Stoßkurzschlußstrom erkannt wurde, ebenfalls in den Umfang der Erfindung. Ebenfalls in den Umfang der Erfindung fällt es demzufolge auch, den Neutralleiterstrom zu überwachen und die Phasen zu trennen, wenn im Neutralleiter ein Stoßkurzschlußstrom erkannt wurde.

Die hierbei an den Widerständen auftretende Spannungsabfälle ($U_{mess}$) werden erfasst und einer Auswerteschaltung zugeführt, die der Übersichtlichkeit halber in Fig. 5 nicht gezeigt ist. Dem Fachmann sind aus dem Stand der Technik zahlreiche Auswerteschaltungen bzw. Meßgeräte bekannt, die verwendet werden können ohne den Umfang der Erfindung oder ihrer Äquivalente zu verlassen. Die verwendeten Messwiderstände sollten möglichst die gleichen Werte aufweisen um Messwertverfälschungen zwischen den einzelnen Außenleitern zu vermeiden. Sollten die Meßwiderstände unterschiedliche Werte aufweisen, so kann dies durch entsprechende Korrekturfaktoren sowie ggf. Kalibrierungen rechnerisch berücksichtigt werden. Die Werte der resultierenden Messspannungen verhalten sich direkt proportional zu den jeweils gewählten Widerstandswerten und lassen sich mit dem ohmschen Gesetz berechnen.

Da die drei so aufgenommenen Messwerte (je ein Strommeßwert pro Phase) Wechselgrößen sind, IGBTs jedoch bei Schaltanwendungen digital angesteuert werden, ist es bevorzugt, eine Gleichrichtung der Meßwerte vorzunehmen.

Wird eine handelsübliche Siliziumdiode in Durchlassrichtung betrieben, so fällt an dieser eine "Schwellenspannung" genannte Spannung in der Größenordnung von 0,6 bis 0,7 V ab. Diese Schwellenspannung muss durch die Messwerte bei Anlagennennbetrieb merklich überschritten werden, um die fehlerfreie Schaltungsfunktion zu gewährleisten. Werden relativ kleine Widerstandswerte $R_{mess}$ in der Größenordnung von wenigen Milliohm verwendet, dann weisen die auszuwertenden Messwerte $U_{mess}$ relativ geringe Spannungsniveaus auf, was die Auswertung erschwert. Hieraus ergeben sich zwangsläufig auch weitere Probleme da eine vollumfängliche Gleichrichtung - speziell im Spannungsbereich von 0 bis 0,7 V - nicht gewährleistet ist. Die Verwendung handelsüblicher Siliziumdioden würde somit Anpassungen der gesamten Schaltung erforderlich machen, um eine sichere Strommessung zu gewährleisten. Es ist daher dem Fachmann ohne weiteres ersichtlich, dass die Verwendung handelsüblicher Standarddioden zwar in den Umfang der Erfindung sowie ihrer Äquivalente fällt, aber keine bevorzugte Ausführungsform darstellt.

Dieser Problematik wird bevorzugt schaltungstechnisch begegnet. Die drei aufgenommenen Messwerte $U_{mess-L1}$, $U_{mess-L2}$ und $U_{mess-L3}$ werden mittels "aktiven Gleichrichtern" gleichgerichtet. Kernstück dieser aktiven Gleichrichter bilden OPVs (sogenannte "Operationsverstärker") welche keinerlei Schwellenspannungen aufweisen. Auf diese Weise ist eine vollumfängliche Gleichrichtung ab 0 V möglich. Ein weiterer Vorteil dieser Ausführungsvariante besteht in der gewonnenen Flexibilität: Zum einen können die gleichgerichteten Messwerte auf beliebige Spannungsniveaus innerhalb der OPV-Betriebsspannungsbereiche angehoben bzw. abgesenkt werden. Zum anderen wird bei der Messwerterfassung - im direkten Vergleich zur Umsetzung mit Siliziumdioden - keinerlei Leistung entzogen, da OPVs aktive Bauelemente mit separater Spannungsversorgung sind. Hierdurch werden Messwertverfälschungen minimiert.

In Fig. 6 ist die bevorzugte aktive Gleichrichtung nebst Ein- und Ausgangsgrößen von $U_{mess-L1}$ beispielhaft dargestellt (Schaltungsplan in der oberen Hälfte, Speicheroszilloskop-Aufnahme in der unteren Hälfte). Als beispielhafte Eingangsgröße wurde ein 50 Hz Sinus mit einer Amplitude von 1 $V_{Spitze}$ gewählt. Anhand der eingezeichneten Hilfslinie (waagerechte Linie bei 0,0 V) ist die Gleichrichtung bereits ab 0 V, vollständig ohne auftretende Schwellenspannung, nachgewiesen. Ebenfalls ersichtlich ist das angehobene Spannungsniveau der Ausgangsgröße im Vergleich zur Eingangsgröße. Der verwendete Spannungsverstärkungsfaktor Gu errechnet sich dabei wie folgt:

$$GU \ = \ R18/(R14 + R17) \ = \ 56 \ k\Omega \ / \ (10 \ k\Omega + 10 \ k\Omega) \ = \ 2{,}8 \qquad (Gl. \ 7)$$

Das heißt, im vorliegenden Beispiel werden die gleichgerichteten Meßwerte von bis zu 1 V verstärkt auf 2,8 V (2,8 * 1 $V_{Spitze}$ = 2,8 $V_{Spitze}$). Bevorzugt exakt identisch aufgebaute und dimensionierte Schaltungen wie in Fig. 6 beispielhaft für Phase L1 gezeigt, sind auch für die Gleichrichtung von $U_{mess-L2}$ und $U_{mess-L3}$ vorzusehen. Die Verwendung exakt baugleicher Gleichrichter für die einzelnen Meßspannungen $U_{mess-L1}$, $U_{mess-L2}$ und $U_{mess-L3}$ ist besonders bevorzugt. Weitere in den Umfang der Erfindung sowie ihrer Äquivalente fallende Ausführungsformen weisen jedoch auch verschiedene Gleichrichter auf und ermöglichen es so, die einzelnen Phasen unabhängig voneinander mit unterschiedlicher Empfindlichkeit zu überwachen.

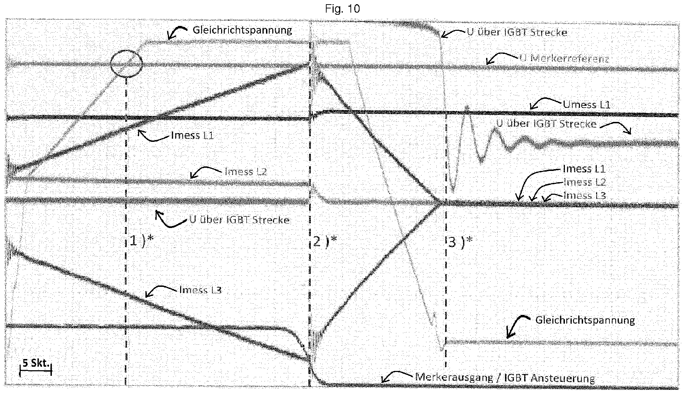

Die - wie vorstehend beschrieben bevorzugt identisch gewonnenen - gleichgerichteten Meßwerte werden wie in Fig. 7 beschrieben zusammengeführt und mittels Dioden voneinander entkoppelt. Das so erhaltene Summensignal $U_{mess-sum}$, welches den Spannungsverlauf analog der Ausgangsspannung einer B6-Brückenschaltung aufweist, wie sie dem Fachmann allgemein bekannt ist, wird einem Komparator (z. B. Bauteil "LT1721" in Fig. 7) zugeführt. Ein Komparator vergleicht zwei Eingangsgrößen miteinander und trifft eine digitale Fallunterscheidung. Ist die Eingangsspannung kleiner als die Vergleichsgröße (Fig. 7: 1,5 V Referenzspannungsquelle V7), so entspricht der Ausgangspegel nahezu 0 V. Wenn die Eingangsspannung die Referenzspannung überschreitet, nimmt der Ausgangspegel den Betriebs- bzw. Versorgungsspannungspegel des Komparators ein. Dem Fachmann ist bekannt, daß es auch entsprechende Bauteile gibt, die ein umgekehrtes Schaltverhalten aufweisen und natürlich gleichermaßen verwendet werden können, ohne den Umfang der Erfindung oder ihrer Äquivalente zu verlassen, bzw. daß es bei analogen Schaltungen technisch einfacher ist, einen definierten Startzustand in Form eines sogenannten "Active-low-Pegels" zu realisieren (vgl. z. B. Fig. 10).

Es existieren somit drei Möglichkeiten zur Beeinflussung der Auslöseschwelle, das heißt der Erzeugung des Abschaltpulses:

- Je größer der gewählte Widerstandswert von $R_{mess}$ ist, desto größer ist ebenfalls Umess.
- Je größer das Verhältnis R18/(R14+R17) ist, desto größer ist die gleichgerichte Spannung (Umess-L1-gleich, Umess-L2-gleich und Umess-L3-gleich).
- Je höher die Komparator-Referenzspannung ist, desto später schaltet dieser ausgangsseitig auf High-Pegel um.

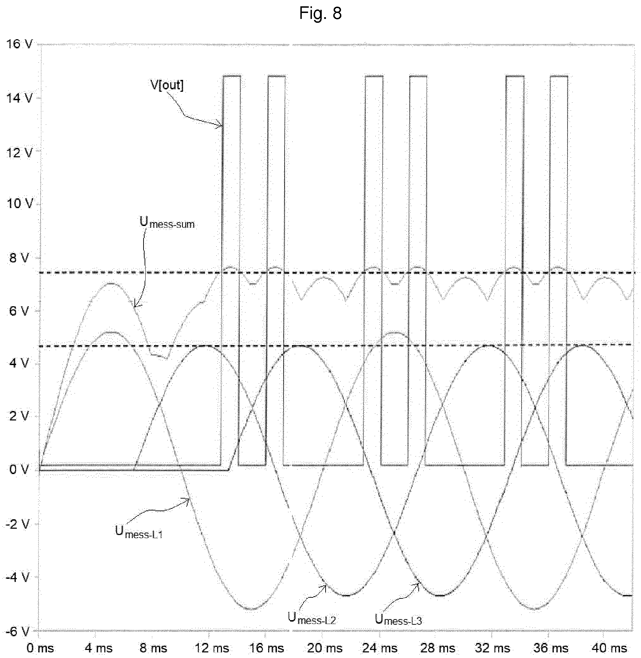

Fig. 8 veranschaulicht die Funktionsweise anhand der beispielhaften Simulation einer Überlastung von L1. Dargestellt sind die Spannungsverläufe von $U_{mess-L1}$, $U_{mess-L2}$ und $U_{mess-L3}$, das gleichgerichtete Summensignal $U_{mess-}$

$_{sum}$ am Komparatoreingang sowie der Spannungsverlauf am Komparatorausgang (V[out]). Die verwendete Referenzspannung am Komparator beträgt 7,5 V. Deutlich erkennbar ist, dass $U_{mess-L1}$ aufgrund der Überlastung die höchste Amplitude aufweist. Nach erfolgter Gleichrichtung sowie Signalzusammenführung kommt es zu leichten Überschwingern bei denen die Referenzspannung punktuell überschritten wird. Bei jeder Überschreitung nimmt der Komparatorausgang ("V(out)"-Verlauf in Fig. 8) einen High-Pegel an, was bedeutet, dass die Überlastung bzw. der Kurzschluss erkannt und ein Abschaltimpuls generiert wird (V(out) auf High-Pegel). Dieser Impuls bzw. diese Impulsfolge wird verwendet, um eine oder mehrere sogenannte IGBT-Treiberplatinen - welche die eigentliche IGBT-Ansteuerung übernehmen-zu steuern bzw. zu "resetten". Durch dieses Steuern bzw. "resetten" der Treiberplatinen werden alle angeschlossenen IGBTs gesperrt, d.h. Stromflüsse auf allen Kollektor-Emitter-Strecken in den IGBTs unterbunden, was letztendlich die elektrische Trennung der Leitungsstrecke zwischen Erzeuger (z. B. Generator) und Verbraucher (z. B. Stromverteilungsnetz) bedeutet. Damit ist eine sichere Entkopplung der Anlage (bspw. Generator) vom Netz erreicht. Es werden dazu im Stand der Technik bekannte Treiberplatinen verwendet, ohne dadurch den Umfang der Erfindung sowie ihrer Äquivalente zu verlassen. Als Beispiel seien die Mitglieder der Modellfamilie "SKHI 10/12 (R) ..." des Herstellers Semikron® genannt.

Die erfindungsgemäße Abschaltvorrichtung muß entweder einen erkannten Netzfehler (d.h. einen Stoßkurzschlußstrom, der zur Abschaltung geführt hat) speichern und abgeschaltet bleiben, um anschließend von einer übergeordneten Netzsteuerung wieder eingeschaltet zu werden; in diesem Falle muß die Vorrichtung mindestens über einen 1-Bit Fehlerspeicher verfügen, der durch die Wieder-Einschaltung durch die übergeordnete Netzsteuerung zurückgesetzt wird. Oder die erfindungsgemäße Vorrichtung umfasst ein internes Steuerungsmodul (synonym Steuerung) und weist hardware- und/oder software-implementierte Zuschaltbedingungen auf, bei Erfüllung derer die Vorrichtung selbst die Wieder-Zuschaltung des Synchrongenerators vornehmen/veranlassen kann, wobei bei dieser Ausführungsvariante bevorzugt ein Fehlerspeicher verwendet wird, der mindestens 2 Bit Speicherkapazität umfasst.

Erfindungsgemäß ist vorgesehen, IGBTs als Schalter einzusetzen und "durchzusteuern", um den Schaltzustand "EIN" zu realisieren. Dem Fachmann ist bekannt, wie IGBTs oder andere nichtmechanische Schaltelemente angesteuert werden müssen, damit Stromfluß erfolgen kann. Infolge der Durchsteuerung wird die Kollektor-Emitter-Strecke leitfähig, wobei das Kollektorpotential hierbei höher als das des Emitters sein muss. Da es sich bei den zu schaltenden Strömen um Wechselspannungsströme handelt, ist die Verwendung zweier IGBTs pro Außenleiter unumgänglich. Beide Emitteranschlüsse werden miteinander verbunden (antiparallele Anordnung/Verschaltung) und aufgrund der üblicherweise intern verbauten Freilaufdiode ergeben sich die Stromwege ganz automatisch. Fig. 9 zeigt beispielhaft ein entsprechendes Schaltbild. Ist der in Fig. 9 linke IGBT durchgeschaltet so fließt der Strom über die Freilaufdiode vom rechten IGBT und umgekehrt. Somit sind beide Stromwege für die positive und negative Sinushalbwelle klar definiert. Da beide Kollektoren in Fig. 9 außen liegen und der Schaltungsaufbau symmetrisch ausgeführt ist, ist die Einbaurichtung in Bezug auf Erzeuger und Verbraucherseite nicht von Belang. Es fällt natürlich ebenfalls in den Umfang der Erfindung sowie ihrer Äquivalente, Halbleiterschaltelemente zu verwenden, die keine integrierte Freilaufdiode aufweisen, und dann stattdessen eine separate externe Diode vorzusehen, die entsprechend Fig. 9 verschaltet ist.

Um die Betriebssicherheit in Hinsicht auf eventuell auftretende Spannungsspitzen weiter zu erhöhen, sind in einigen Ausführungsformen der Erfindung Varistoren parallel zur Kollektor-Emitter-Strecke eines jeden IGBTs vorgesehen (vgl. Fig. 9). Beispielsweise bei einer maximal zulässigen Kollektor-Emitter-Spannung ($V_{CES}$) von 1200 V, sollte der verwendete Varistor in etwa diesem Wert entsprechen. Ein nutzbarer Typ wäre beispielsweise der Z80M112 des Herstellers CKE®. Die Nenndurchschlagsspannung dieses Typs beträgt 1100 V $\pm$ 10 %. Somit beträgt die maximale Spannung vor dem Durchschlag 1210 V.

Unter Anwendung der vorstehend beschriebenen Auswahlkriterien wurden die folgenden konkreten experimentellen Ausführungsbeispiele der erfindungsgemäßen Vorrichtung realisiert. Die folgenden experimentellen Aufbauten stellen Generator-Netzanbindungen in einem Niederspannungsnetz unter Verwendung erfindungsgemäßer Abschaltvorrichtungen dar.

Beispiel 1:

Versuchsparameter:

- Niederspannungs-3-Phasen-Netz
- AEG Laborgenerator (3 kW Nennleistung, 4 A Nennstrom,32 A Kurzschlusstrom)
- Last: Kurzschlussschalter
- Auslösung des Stoßkurzschlußstromes mittels Eigenbau-Vorrichtung
- Nichtmechanische Schaltelemente: Semikron IGBT, Typ SKM300GA12E4
- Strommessung: Stangesness Strommesstrafo

Beispiel 2:

Versuchsparameter:

- Niederspannungs-3-Phasen-Netz
- AEG Laborgenerator (30 kW Nennleistung, 40 A Nennstrom, 300 A Kurzschlusstrom)
- Last: Kurzschlussschalter
- Auslösung des Stoßkurzschlußstromes mittels Eigenbau-Vorrichtung
- Nichtmechanische Schaltelemente: Semikron IGBT, Typ SKM300GA12E4
- Strommessung: Stangesness Strommesstrafo

Die Aufnahme der Versuchsdaten (z. B. Ströme, Spannungen, Zeiten, Schaltzustände) erfolgte bei allen Versuchen/Beispielen mittels eines Speicheroszilloskops.

Fig. 10 zeigt die während des Versuchs aufgezeichneten Strom- und Spannungsverläufe, sowie die generierten Schaltsignale. Deutlich erkennbar ist die erreichte extrem kurze Ansprechzeit und die äußerst schnelle Abschaltung. Im vorliegenden, in Fig. 10 gezeigten Beispiel (Beispiel 2), waren die erreichten Ergebnisse folgende:

- Zwischen Überschreiten des Stromes, d.h. dem Auftreten des Stoßkurzschlußstromes, und der Auslösung, d.h. der Trennung des Generators vom Netz liegen ca. 700 ns.
- Der Strom ist binnen $1\mu s$ unter 100 mA gefallen und ist nach ca. $30\mu s$ vollständig abgeschaltet.

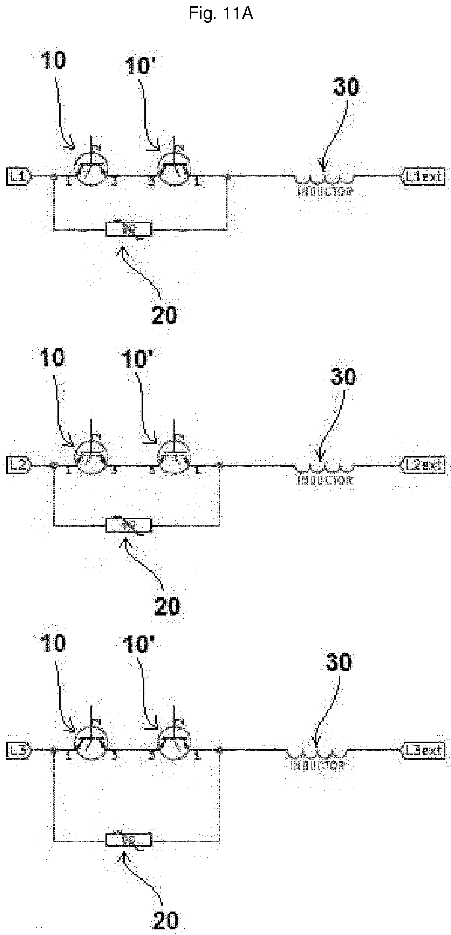

Die Ausgestaltung des Gegenstands der Erfindung als Vorrichtung zur Sicherstellung der Netzstabilität in Stromversorgungsnetzen durch Begrenzung eines Stoßkurzschlußstromes sieht folgende Ausgestaltungsmöglichkeiten vor, die nachfolgend beispielhaft anhand der Abbildungen Fig. 11A-C näher beschrieben werden.

Dem Fachmann ist bekannt, daß bei der Erstellung von Elektronikschaltplänen mit entsprechender Software (z.B. "EAGLE" - "Easy Applicable Graphical Layout Editor") die Kennzeichnung der Anschlußpins der Bauteile zumindest teilweise frei wählbar sind, so daß bei den durch die Software generierten Bezifferungen von Anschlußpins gleiche Pins (z.B. Emitter, Kollektor, Gate bei Transistoren) in verschiedenen Zeichnungen unterschiedliche Ziffern aufweisen können. Dies gilt nicht für Bezugszeichen gemäß einschlägiger Patentgesetze/Verordnungen; bei diesen bezeichnen gleiche Bezugszeichen in verschiedenen Zeichnungen (jeweils in Verbindung mit geschwungenen Pfeilen) stets das gleiche technische Merkmal.

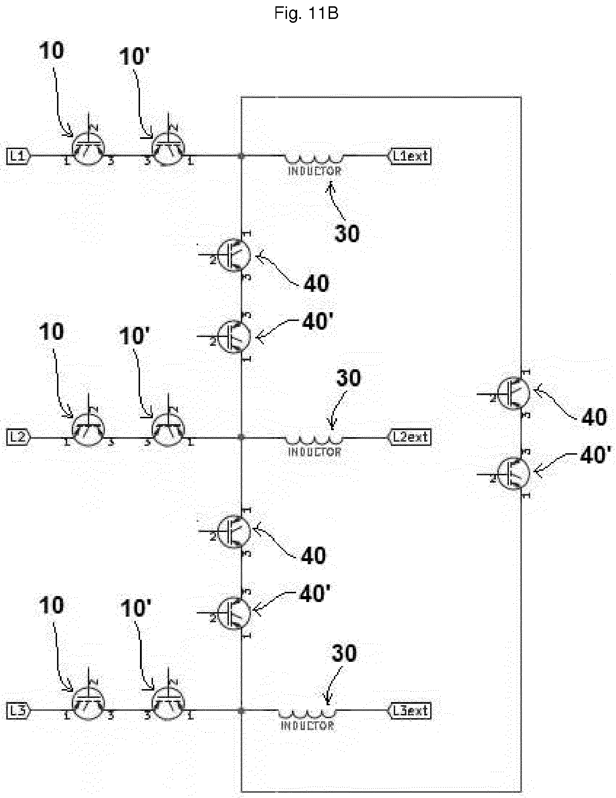

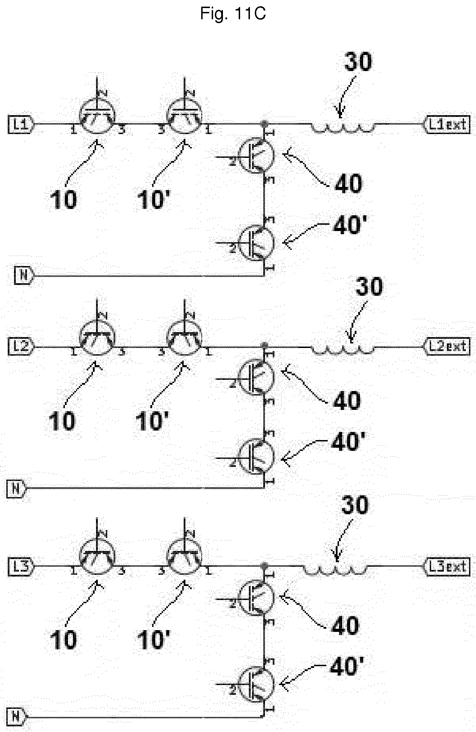

Fig. 11A zeigt am Beispiel eines dreiphasigen Stromnetzes eine erste beispielhafte Ausführungsform des Gegenstands der Erfindung zur Einspeisung eines definierten Kurzschlußstroms in ein Stromnetz (Phasen L1 bis L3, wobei der Zusatz "ext" jeweils die externe Netzseite, d. h. das übergeordnete Stromnetz, in das eingespeist wird, kennzeichnet). Die Bezugszeichen **10** und **10'** bezeichnen jeweils die zwei in einer Phase des Stromnetzes antiparallel zueinander verschalteten Halbleiterschaltelemente, im vorliegenden Beispiel mit (nicht gezeigter) integrierter Freilaufdiode. Dieses Ausführungsbeispiel weist auch in jeder Phase einen zu den jeweiligen Halbleiterschaltelementen parallel geschalteten Varistor **(20)** auf, sowie die zusätzliche Induktivität (Spule) mit dem Bezugszeichen **30,** die es bereits in dieser einfachsten Ausführungsvariante ermöglicht, Stoßkurzschlußströme zu begrenzen und/oder kontrolliert aufzubauen. Der Übersichtlichkeit halber ist der ebenfalls erforderliche Prozessor oder FPGA oder die entsprechende analoge Steuerung zur Auslösung der Strombegrenzung, d.h. der Einspeisung des definierten Stoß-Kurzschlußstroms nicht gezeigt; die dazu erforderlichen Steuersignalleitungen werden an die hier mit "2" markierten Anschlüsse der Halbleiterschaltelemente angeschlossen. Die Funktionsweise ist grundsätzlich derart, daß durch den Aufbau des Magnetfeldes in der in der Phasenleitung befindlichen Induktivität (Spule **30**) ein "Pufferspeicher" für den eingespeisten Strom geschaffen wird, aus dem beim Trennen vom Netz, d.h. dem Öffnen der Halbleiterschaltelemente **10, 10'** und dem dadurch initiierten Zusammenbruch des Magnetfeldes die aus dem zusammenbrechenden Magnetfeld "abfließende" Energie als definierter Kurzschlußstrom mit zeitlich abnehmender Intensität in das Stromnetz eingespeist wird. Das heißt, die Trennung vom Netz im Falle eines Stoßkurzschlußstromes erfolgt nicht schlagartig, sondern asymptotisch abfallend, wobei der abgetrennte Generator bzw. das abgetrennte Teilnetz ggf. noch während der abfallenden Flanke des definierten Kurzschlußstromes auch wieder zu dem übergeordneten Netz zugeschaltet werden kann. Entsprechende Softwarealgorithmen oder analoge Steuerschaltungen, mit denen dies erfindungsgemäß erreicht werden kann, sind dem Fachmann bekannt und der Übersichtlichkeit halber in den Fig. 11A, 11B und 11C nicht gezeigt.

Fig. 11B zeigt ebenfalls am Beispiel eines dreiphasigen Stromnetzes eine zweite beispielhafte Ausführungsform des Gegenstands der Erfindung zur Einspeisung eines definierten Kurzschlußstroms in ein Stromnetz (Phasen L1 bis L3, wobei der Zusatz "ext" auch hier jeweils die externe Netzseite, d. h. das übergeordnete Stromnetz, in das eingespeist wird, kennzeichnet). Die Bezugszeichen **10** und **10'** bezeichnen auch hier jeweils die zwei in einer Phase des Stromnetzes antiparallel zueinander verschalteten Halbleiterschaltelemente, im vorliegenden Beispiel ebenfalls mit (nicht gezeigter) integrierter Freilaufdiode. Dieses Ausführungsbeispiel weist ebenfalls die zusätzliche Induktivität (Spule) **30** auf, die es ermöglicht, Stoßkurzschlußströme zu begrenzen und/oder kontrolliert aufzubauen, benötigt aber keine in den Phasen zu den jeweiligen Halbleiterschaltelementen **10, 10'** parallel geschalteten Varistoren, denn der Überschußstrom wird bei diesem Ausführungsbeispiel nicht durch Verbraucher (z.B. Varistoren) aufgefangen, sondern mittels entsprechender Ansteuerung der zusätzlichen paarweise antiparallel miteinander verschalteten Halbleiterschaltelemente **40, 40'** in jeweils eine der beiden anderen Phasen umgeleitet, die noch Aufnahmekapazität für den Stromfluß aufweist. Die dafür erforderliche Ansteuerung der zwischen die Phasen geschalteten Halbleiterschaltelemente **40, 40'** erfolgt ebenfalls erfindungsgemäß in aus dem Stand der Technik bekannter Weise durch einen Prozessor oder FPGA oder eine entsprechende analoge Steuerung, wobei die Signalleitungen auch hier an die mit "2" markierten Anschlüsse der Halbleiterschaltelemente angeschlossen sind. Der Übersichtlichkeit halber ist der ebenfalls erforderliche Prozessor oder FPGA oder die entsprechende analoge Steuerung zur Auslösung der Strombegrenzung sowie der Umleitung des Stoßkurzschlußstromes in eine andere Phase, d.h. der Einspeisung des definierten Stoß-Kurzschlußstroms nicht gezeigt.

Fig. 11C zeigt ebenfalls am Beispiel eines dreiphasigen Stromnetzes eine dritte beispielhafte Ausführungsform des Gegenstands der Erfindung zur Einspeisung eines definierten Kurzschlußstroms in ein Stromnetz (Phasen L1 bis L3, wobei der Zusatz "ext" auch hier jeweils die externe Netzseite, d. h. das übergeordnete Stromnetz, in das eingespeist wird, kennzeichnet). Die Bezugszeichen **10** und **10'** bezeichnen auch hier jeweils die zwei in einer Phase des Stromnetzes antiparallel zueinander verschalteten Halbleiterschaltelemente, im vorliegenden Beispiel ebenfalls mit (nicht gezeigter) integrierter Freilaufdiode. Dieses Ausführungsbeispiel weist ebenfalls die zusätzliche Induktivität (Spule) **30** auf, die es ermöglicht, Stoßkurzschlußströme zu begrenzen und/oder kontrolliert aufzubauen, benötigt aber keine in den Phasen zu den jeweiligen Halbleiterschaltelementen **10, 10'** parallel geschalteten Varistoren, denn der Überschußstrom wird bei diesem Ausführungsbeispiel nicht durch Verbraucher (z.B. Varistoren) aufgefangen, sondern mittels entsprechender Ansteuerung der zusätzlichen paarweise antiparallel miteinander verschalteten Halbleiterschaltelemente **40, 40'** in den Nullleiter ("N") umgeleitet, der naturgemäß noch Aufnahmekapazität für den Stromfluß aufweist. Die dafür erforderliche Ansteuerung der zwischen den Phasen und dem Nullleiter geschalteten Halbleiterschaltelemente **40, 40'** erfolgt ebenfalls erfindungsgemäß in aus dem Stand der Technik bekannter Weise durch einen Prozessor oder FPGA oder eine entsprechende analoge Steuerung, wobei die Signalleitungen auch hier an die mit "2" markierten Anschlüsse der Halbleiterschaltelemente angeschlossen sind. Der Übersichtlichkeit halber ist der ebenfalls erforderliche Prozessor oder FPGA oder die entsprechende analoge Steuerung zur Auslösung der Strombegrenzung sowie der Umleitung des Stoßkurzschlußstromes in den Nullleiter nicht gezeigt.

**Abbildungslegenden**

Fig. 1A: Beispielhaft gezeigter Kurzschlußstromverlauf der Synchronmaschine von Leroy-Somer (Nennstrom ca. 115 A) bei generatornahem Kurzschluß (3-Phasen-Kurzschlußkurven, lastfrei bei Nenndrehzahl (Stern-Schaltung Y))

Fig. 1B: Beispielhaft gezeigter zeitlicher Verlauf des Stroms (50 Hz) bei einem generatornahen Kurzschluß ("worst case")

Fig. 2A: Schaltbild (Beispiel) einer Anordnung von jeweils zwei in jeder Phase (L1/L1b, L2/L2b, L3/L3b) eines Stromnetzes antiparallel zueinander verschalteten Halbleiterschaltelementen, wie beispielsweise IGBTs (N/Nb = Nulleiter (synonym Neutralleiter), Masseleitung; die verwendeten Bauteilsymbole und Anschlußbezifferungen sind dem Fachmann bekannt).

Fig. 2B: Schaltbild (Beispiel) einer Anordnung von jeweils zwei in separaten Strompfaden (im Beispiel: drei) einer Phase eines Stromnetzes antiparallel zueinander verschalteten Halbleiterschaltelementen, wie beispielsweise IGBTs, so dass die Bauelemente in jedem der m Strompfade nur 1/m der Gesamtleistung (im Beispiel ein Drittel, d.h. m = 3) aushalten müssen.

Fig. 3: Beispielhafter schematischer Messaufbau zur Ermittlung von Stoßkurzschlußströmen. Der Schalter Q1 als kurzschlussauslösendes Medium hat bei diesem Versuchsaufbau alle auftretenden Ströme zu tragen und ist daher entsprechend zu dimensionieren.

Fig. 4: Oszillogramm eines ausgewerteten Kurzschlußversuchs (Beispiel)

Fig. 5: Schematische Meßanordnung zur Stromüberwachung (Beispiel)

Fig. 6: Beispielhafter Schaltungsaufbau eines aktiven Gleichrichters sowie beispielhafte Oszilloskopauswertung.

Fig. 7: Beispielhafter Schaltungsaufbau der Überlastauswertung / Abschaltpulserzeugung aus dem Summensignal von $U_{mess-L1-gleich}$, $U_{mess-L2-gleich}$ und Umess-L3-gleich.

Fig. 8: Beispielhafte Simulation von Komparator-Signal ("V[out]") und weiterer Spannungsverläufen im Auslösefall, d.h. bei Erreichen oder Überschreiten des gewählten Grenzwertes von $U_{mess-sum}$ (hier beispielhaft 7,5 V).

Fig. 9: Schaltungslayout (Beispiel) zweier IGBT's pro Außenleiter

Fig. 10: Beispielhaftes Oszilloskopbild von der Durchführung des erfindungsgemäßen Verfahrens (Beispiel 2). Die in Fig. 10 durch die senkrechten gestrichelten Linien markierten Zeitpunkte 1)*, 2)* und 3)* sind:

1)* = Überschreiten des Grenzwertes zur Erkennung des Stoßkurzschlußstromes (der kurz oberhalb abknickende Verlauf der Gleichrichtspannung (s.u.) resultiert aus der Bereichsüberschreitung der Anzeige zu diesem Zeitpunkt),
2)* = Beginn der Einleitung der Netztrennung (Ausschaltung, der Zeitraum zwischen Punkt 1)* und Punkt 2)* entspricht dem Verzögerungsglied, das sich im vorliegenden (analogen) Versuchsaufbau aus den Betriebsparametern, d.h. Schaltzeiten usw., der gewählten Bauteile ergibt),
3)* = Erreichen der vollständigen Netztrennung.

Die gemessenen Zeiten, Spannungen und Ströme können Fig. 10 mit folgenden Skalierungsfaktoren entnommen werden, wobei in der linken unteren Ecke von Fig. 5 ein Meßbalken mit einer Länge von ca. 5 Skalenteilen (Skt.) eingezeichnet ist, der sowohl für die horizontale Zeitskala als auch die vertikalen Meßskalen gilt:

- U Merkerreferenz (Synonym zur Referenzspannung der Referenzspannungsquelle für den Komparator): 2V / Skt.
- Umess L1 (Synonym zu $U_{mess-L1}$): 5 V / Skt.
- U über IGBT Strecke (Spannungsabfall über die beiden IGBT's): 200 V / Skt.
- Gleichrichtspannung (Synonym zu $U_{mess-sum}$): 1 V / Skt.
- Imess L1 (gemessener Phasenstrom in Phase L1): 20 A / Skt.
- Imess L2 (gemessener Phasenstrom in Phase L2): 20 A / Skt.
- Imess L3 (gemessener Phasenstrom in Phase L3): 20 A / Skt.
- Merkerausgang / IGBT Ansteuerung (Synonym zu Komparatorausgang V(out)): 10 V / Skt.
- Zeitskala: 100 $\mu$s / Skt.

Dem Fachmann ist bekannt, daß die vorstehend beispielhaft angegebenen Skalierungsfaktoren, z. B. der Gleichrichtspannung, geeignet gewählt werden müssen, um die einzelnen Signalverläufe gemeinsam auf dem für den Versuchsaufbau verwendeten Anzeigegerät darstellen zu können.

Fig. 11A: Vorrichtung zur Kontrolle von Stoßkurzschlußströmen in der Ausführungsvariante b), d.h. als erfindungsgemäße Strombegrenzungsvorrichtung: Ausführungsbeispiel für ein dreiphasiges Stromnetz unter Verwendung einer Induktivität (Spule) (30) pro Phase zusätzlich zu den antiparallel zueinander verschalteten Halbleiterschaltelementen (10, 10'), die bereits in der Ausführungsvariante a) vorgesehen sind, .

Fig. 11B: Vorrichtung zur Kontrolle von Stoßkurzschlußströmen in der Ausführungsvariante b), d.h. als erfindungsgemäße Strombegrenzungsvorrichtung: Ausführungsbeispiel für ein dreiphasiges Stromnetz unter Verwendung einer Induktivität (Spule) (30) pro Phase zusätzlich zu den antiparallel zueinander verschalteten Halbleiterschaltelementen (10, 10'), die bereits in der Ausführungsvariante a) vorgesehen sind, sowie weiteren paarweise antiparallel zueinander verschalteten Halbleiterelementen 40, 40', die zwischen die Phasen positioniert sind.

Fig. 11C: Vorrichtung zur Kontrolle von Stoßkurzschlußströmen in der Ausführungsvariante b), d.h. als erfindungsgemäße Strombegrenzungsvorrichtung: Ausführungsbeispiel für ein dreiphasiges Stromnetz unter Verwendung einer Induktivität (Spule) **(30)** pro Phase zusätzlich zu den antiparallel zueinander verschalteten Halbleiterschaltelementen **(10, 10')**, die bereits in der Ausführungsvariante a) vorgesehen sind, sowie weiteren paarweise antiparallel zueinander verschalteten Halbleiterelementen **40, 40'**, die zwischen jeder Phase und dem Nulleiter ("N") positioniert sind.

**Patentansprüche**

1. Vorrichtung zur Kontrolle von Stoßkurzschlußströmen in Stromversorgungsnetzen, wobei die Vorrichtung

   - in jedem Strompfad einer jeden Phase mindestens zwei nichtmechanische Schaltelemente aufweist, die unabhängig voneinander ausgewählt sind aus

     der Liste umfassend Leistungstransistoren und Thyratrons, sowie mindestens zwei Dioden, wobei die nichtmechanischen Schaltelemente und die Dioden in jedem Strompfad einer jeden Phase jeweils antiparallel zueinander verschaltet sind;

   - eine Messvorrichtung aufweist zur zeitlichen Messung des Stromflusses in jeder Phase $L_1$ bis $L_n$ der Einspeiseleitung zur Gewinnung von n
   phasenspezifischen, den Stromflüssen proportionalen, Einzelmeßwerten $U_{mess-L(1)}$ bis $U_{mess-L(n)}$, wobei diese Messvorrichtung zur Messung des Stromverlaufs Stromwandler und Meßwiderstände umfasst;
   - eine Berechnungsvorrichtung aufweist zur Berechnung mindestens eines Summensignals $U_{mess-sum}$ ;
   - eine Auswertungsvorrichtung aufweist, die aus dem Summensignal $U_{mess-sum}$
   durch Vergleich mit dem Grenzwert mindestens ein Steuersignal erzeugt zur Steuerung der mindestens zwei nichtmechanischen Schaltelemente pro Strompfad einer jeden Phase, wobei diese Auswertungsvorrichtung mindestens einen Widerstand, eine Referenzspannungsquelle und einen Komparator umfasst, und so eingerichtet ist, dass das mindestens eine Steuersignal dann besteht, wenn das gleichgerichtete Summensignal $U_{mess-sum}$ die Referenzspannung punktuell überschritten hat ;
   - eine Steuerung aufweist, die mindestens einen 1-Bit Fehlerspeicher umfasst und
   - mindestens ein einstellbares Verzögerungsglied aufweist,

   **dadurch gekennzeichnet, dass** die Vorrichtung

   - mindestens einen Prozessor oder einen FPGA oder eine analoge Steuerschaltung aufweist ;
   - mindestens eine Spule **(30)** mit definierter Induktivität in jeder Phasenleitung aufweist, wobei diese mindestens eine Spule **(30)** in jeder Phasenleitung zwischen dem bidirektionalen Halbleiterschalter **(10, 10')** und dem externen Netz befindlich ist ;
   - mindestens einen weiteren zusätzlichen bidirektionalen Halbleiterschalter **(40, 40')** aufweist, der entweder zwischen jeweils zwei Phasen oder zwischen jeweils einer Phase und dem Nulleiter befindlich ist, und wobei es sich bei den diesen mindestens einen zusätzlichen bidirektionalen Halbleiterschalter bildenden Halbleiterschaltelementen um Halbleiterschaltelemente handelt, ausgewählt aus der Liste umfassend IGBTs, MOSFETs, Thyratrons.

2. Vorrichtung gemäß Anspruch 1, **dadurch gekennzeichnet, daß** die Berechnungsvorrichtung das Summensignal $U_{mess-sum}$ berechnet durch

   i) die Ermittlung und Auswahl des Maximalwertes unter den n phasenspezifischen Einzelmesswerten $U_{mess-L(1)}$ bis $U_{mess-L(n)}$ aus der Messvorrichtung, wobei die Berechnungsvorrichtung Bauteile umfasst, unabhängig voneinander ausgewählt aus der Liste umfassend Messwiderstände, Messtransformatoren, Hallsonden, Operationsverstärker, Logikschaltungen, FPGA, CPLD, Prozessoren, und/oder
   ii) den Vergleich der n phasenspezifischen Einzelmesswerte $U_{mess-L(1)}$ bis $U_{mess-L(n)}$ aus der Messvorrichtung mit den jeweils korrespondierenden phasenspezifischen Grenzwerten, wobei die Berechnungsvorrichtung

     Bauteile umfasst, unabhängig voneinander ausgewählt aus der Liste umfassend Messwiderstände, Messtransformatoren, Hallsonden, Operationsverstärker, Logikschaltungen, FPGA, CPLD, Prozessoren, und/oder

iii) die Gleichrichtung der Einzelmeßwerte $U_{mess-L(1)}$ bis $U_{mess-L(n)}$, aus der Messvorrichtung, wobei die Berechnungsvorrichtung für die Gleichrichtung von Einzelmeßwerten Widerstände, Dioden und Operationsverstärker sowie eine untergeordnete Teilvorrichtung $T_B$ umfasst zur Zusammenführung der gleichgerichteten Einzelmeßwerte $U_{mess-L(1)-gleich}$ bis $U_{mess-L(n)-gleich}$ zu einem Summensignal $U_{mess-sum}$, das proportional zum gesamten Stromfluß in der Einspeiseleitung ist, wobei diese untergeordnete Teilvorrichtung $T_B$ zur Zusammenführung der gleichgerichteten Einzelmeßwerte je mindestens eine Diode in jeder Eingangsleitung eines gleichgerichteten Einzelmeßwertes $U_{mess-L(1)-gleich}$ bis $U_{mess-L(n)-gleich}$ zur Entkopplung der einzelnen gleichgerichteten Einzelmeßwerte voneinander umfasst,
und/oder

iv) die Bildung der Beträge $|U_{mess-L(1)}|$ bis $|U_{mess-L(n)}|$ der Einzelmesswerte $U_{mess-L(1)}$ bis $U_{mess-L(n)}$ aus der Messvorrichtung und die Verwendung dieser vorzeichen-

unabhängigen Werte $|U_{mess-L(1)}|$ bis $|U_{mess-L(n)}|$ anstelle der vorzeichenbehafteten realen Einzelmesswerte $U_{mess-L(1)}$ bis $U_{mess-L(n)}$ aus der Messvorrichtung in allen Ausgestaltungen i) oder ii) oder iii) dieser Berechnungsvorrichtung, wobei diese Berechnungsvorrichtung
Bauteile umfasst, unabhängig
voneinander ausgewählt aus der Liste umfassend Messwiderstände, Messtransformatoren, Hallsonden, Operationsverstärker, Logikschaltungen, FPGA, CPLD, Prozessoren.

3. Vorrichtung gemäß Anspruch 1 oder Anspruch 2, **dadurch gekennzeichnet, daß** die Vorrichtung zusätzlich eine Sicherung aufweist.

4. Verwendung einer Vorrichtung gemäß einem der vorhergehenden Ansprüche 1 bis 3 in einem Mittelspannungs-Stromnetz oder in einem Niederspannungs-Stromnetz zur Unterdrückung von Stoßkurzschlußströmen während der Anlaufphase von mindestens einem an das Mittelspannungs-Stromnetz oder an das Niederspannungs-Stromnetz angeschlossenen Synchrongenerator.

5. Vorrichtung zur Kontrolle von Stoßkurzschlußströmen in Stromversorgungsnetzen gemäß Anspruch 1, **dadurch gekennzeichnet, dass** die Vorrichtung weiterhin mindestens einen weiteren zusätzlichen bidirektionalen Halbleiterschalter **(40, 40')** aufweist, der einen Freilaufpfad zu einer anderen Phase oder zu dem Nulleiter ermöglicht.

**Claims**

1. Device for controlling surge short-circuit currents in power supply networks, wherein the device

- has at least two non-mechanical switching elements in each current path of each phase, which are independently selected from the list comprising power transistors and thyratrons, as well as at least two diodes, wherein the non-mechanical switching elements and the diodes in each current path of each phase are connected anti-parallel to each other;
- has a measuring device for measuring the current flow over time in each phase $L_1$ to $L_n$ of the feed line in order to obtain n phase-specific individuallly measured values $U_{mess-L(1)}$ to $U_{mess-L(n)}$ that are proportional to the current flows, wherein this measuring device for measuring the current flow comprises current transformers and measuring resistors;
- has a calculation device for calculating at least one sum signal Umess-sum ;
- has an evaluation device which generates at least one control signal from the sum signal $U_{mess-sum}$ by comparison with the limit value for controlling the at least two non-mechanical switching elements per current path of each phase, wherein this evaluation device comprises at least one resistor, a reference voltage source and a comparator, and is arranged in such a way that the at least one control signal exists when the rectified sum signal $U_{mess-sum}$ has exceeded the reference voltage at a specific point;
- has a control system comprising at least one 1-bit error memory
and
- has at least one adjustable delay element,

**characterized in that** the device

- has at least one processor or an FPGA or an analog control circuit ;
- has at least one coil **(30)** with defined inductance in each phase line, wherein this at least one coil **(30)**

in each phase line is located between the bidirectional semiconductor switch **(10, 10')** and the external network ;
- has at least one further additional bidirectional semiconductor switch **(40, 40')**, which is located either between two phases or between one phase and the neutral conductor, and wherein the semiconductor switching elements forming this at least one additional bidirectional semiconductor switch are semiconductor switching elements selected from the list comprising IGBTs, MOSFETs, thyratrons.

2. Device according to claim 1, **characterised in that** the calculation device calculates the sum signal Umess-sum by

   i) determining and selecting the maximum value among the n phase-specific individual measured values $U_{mess-L(1)}$ to $U_{mess-L(n)}$ from the measuring device, wherein the calculation device components are selected independently of one another from the list comprising measuring resistors, measuring transformers, Hall probes, operational amplifiers, logic circuits, FPGA, CPLD, processors, and/or

   ii) comparing the n phase-specific individual measured values $U_{mess-L(1)}$ to $U_{mess-L(n)}$ from the measuring device with the respective corresponding phase-specific limit values, wherein the calculation device comprises components, independently selected from each other from the list comprising measuring resistors, measuring transformers, Hall probes, operational amplifiers, logic circuits, FPGA, CPLD, processors,
   and/or

   iii) rectifying the individual measured values $U_{mess-L(1)}$ to $U_{mess-L(n)}$ from the measuring device, wherein the calculation device for rectifying individual measured values comprises resistors, diodes and operational amplifiers as well as a subordinate sub-device $T_B$ for combining the rectified individual measured values $U_{mess-L(1)-equal}$ to $U_{mess-L(n)-equal}$ into a sum signal Umess-sum which is proportional to the total current flow in the feed line, wherein this subordinate sub-device TB for combining the rectified individual measured values comprises at least one diode in each input line of a rectified individual measured value $U_{mess-L(1)-equal}$ to $U_{mess-L(n)-equal}$ for decoupling the individual rectified individual measurement values from each other,
   and/or

   iv) forming the magnitudes $|U_{mess-L(1)}|$ to $|U_{mess-L(n)}|$ of the individuallly measured values $U_{mess-L(1)}$ to $U_{mess-L(n)}$ from the measuring device and the use of these sign-independent values $|U_{mess-L(1)}|$ to $|U_{mess-L(n)}|$ instead of the sign-bearing real individual measurement values $U_{mess-L(1)}$ to $U_{mess-L(n)}$ from the measuring device in all embodiments i) or ii) or iii) of this calculation device, wherein this calculation device comprises components independently selected from the list comprising measuring resistors, measuring transformers, Hall probes, operational amplifiers, logic circuits, FPGA, CPLD, processors.

3. Device according to claim 1 or claim 2, **characterized in that** the device additionally comprises a fuse.

4. Use of a device according to one of the preceding claims 1 to 3 in a medium-voltage power grid or in a low-voltage power grid for suppressing surge short-circuit currents during the start-up phase of at least one synchronous generator connected to the medium-voltage power grid or to the low-voltage power grid.

5. Device for controlling surge short-circuit currents in power supply networks according to claim 1, **characterised in that** the device further comprises at least one additional bidirectional semiconductor switch **(40, 40')** which enables a free-wheeling path to another phase or to the neutral conductor.


**Revendications**

1. Dispositif pour contrôler les courants de court-circuit de choc dans les réseaux d'alimentation électrique, le dispositif

   - comportant, dans chaque circuit électrique de chaque phase, au moins deux éléments de commutation non mécaniques qui sont choisis indépendamment l'un de l'autre parmi la liste comprenant des transistors de puissance et des thyratrons, ainsi qu'au moins deux diodes, les éléments de commutation non mécaniques et les diodes dans chaque circuit de courant de chaque phase étant connectés de manière antiparallèle les uns aux autres ;
   - comporte un dispositif de mesure pour mesurer dans le temps le flux de courant dans chaque phase $L_1$ à $L_n$ de la ligne d'alimentation afin d'obtenir n valeurs de mesure individuelles spécifiques à chaque phase, proportionnelles aux flux de courant $U_{mess-L(1)}$ à $U_{mess-L(n)}$, ce dispositif de mesure pour mesurer le courant, des transformateurs de courant et des résistances de mesure ;
   - comporte un dispositif de calcul pour calculer au moins un signal somme $U_{mess-sum}$ ;
   - comporte un dispositif d'évaluation qui génère, à partir du signal somme $U_{mess-sum}$ et par comparaison avec la valeur limite, au moins un signal de commande pour commander les au moins deux éléments de commutation non mécaniques par chemin de courant de chaque phase, ce dispositif d'évaluation comprenant au moins une résistance, une source de tension de référence et un comparateur, et étant conçu de telle sorte que le au moins un signal de commande existe lorsque le signal de somme redressé $U_{mess-sum}$ a ponctuellement dépassé la tension de référence;

- comporte une commande qui comprend au moins une mémoire d'erreur à 1 bit et
- au moins un élément de retard réglable,

**caractérisé en ce que** le dispositif

- comporte au moins un processeur ou un FPGA ou un circuit de commande analogique ;
- au moins une bobine (30) avec une inductance définie dans chaque ligne de phase, cette au moins une bobine **(30)** étant située dans chaque ligne de phase entre le commutateur à semi-conducteur bidirectionnel **(10, 10')** et le réseau externe ;
- au moins un autre commutateur à semi-conducteur bidirectionnel supplémentaire (40, 40') qui est situé soit entre deux phases respectives, soit entre une phase respective et le conducteur neutre, et dans lequel les éléments de commutation à semi-conducteurs formant ce au moins un commutateur à semi-conducteurs bidirectionnel supplémentaire sont des éléments de commutation à semi-conducteurs choisis parmi la liste comprenant les IGBT, les MOSFET et les thyratrons.

2. Dispositif selon la revendication 1, **caractérisé en ce que** le dispositif de calcul calcule le signal somme $U_{mess-sum}$ en

i) déterminant et sélectionnant la valeur maximale parmi les n valeurs de mesure individuelles spécifiques à la phase $U_{mess-L(1)}$ à $U_{mess-L(n)}$ provenant du dispositif de mesure, le dispositif de calcul des composants choisis indépendamment les uns des autres dans la liste comprenant des résistances de mesure, des transformateurs de mesure, des sondes à effet Hall, des amplificateurs opérationnels, des circuits logiques, des FPGA, des CPLD, des processeurs,
et/ou

ii) la comparaison des n valeurs de mesure individuelles spécifiques à la phase $U_{mess-L(1)}$ à $U_{mess-L(n)}$ provenant du dispositif de mesure avec les valeurs limites spécifiques à la phase correspondantes, le dispositif de calcul comprenant des composants choisis indépendamment sélectionnés indépendamment les uns des autres dans la liste comprenant des résistances de mesure, des transformateurs de mesure, des sondes à effet Hall, des amplificateurs opérationnels, des circuits logiques, des FPGA, des CPLD, des processeurs,
et/ou

iii) le redressement des valeurs de mesure individuelles $U_{mess-L(1)}$ à $U_{mess-L(n)}$, à partir du dispositif de mesure, le dispositif de calcul comprend, pour le redressement des valeurs de mesure individuelles, des résistances, des diodes et des amplificateurs opérationnels ainsi qu'un dispositif partiel subordonné $T_B$ pour regrouper les valeurs de mesure individuelles redressées $U_{mess-L(1)-}$ égal à $U_{mess-L(n)-}$ égal en un signal somme $U_{mess-sum}$ qui est proportionnel au flux de courant total dans la ligne d'alimentation, ce dispositif partiel subordonné $T_B$ pour la réunion des valeurs de mesure individuelles redressées comprenant au moins une diode dans chaque ligne d'entrée d'une valeur de mesure individuelle redressée $U_{mess-L(1)-égal}$ à $U_{mess-L(n)-égal}$ pour le découplage des différentes valeurs de mesure individuelles redressées les unes des autres,
et/ou

iv) la formation des valeurs absolues $|U_{mess-L(1)}|$ à $|U_{mess-L(n)}|$ des valeurs de mesure individuelles $U_{mess-L(1)}$ à $U_{mess-L(n)}$ à partir du dispositif de mesure et l'utilisation de ces valeurs sans signe $|U_{mess-L(1)}|$ à $|U_{mess-L(n)}|$ à la place des valeurs de mesure réelles avec signe $U_{mess-L(1)}$ à $U_{mess-L(n)}$ provenant du dispositif de mesure dans toutes les configurations i) ou ii) ou iii) de ce dispositif de calcul, ce dispositif de calcul comprenant des composants choisis indépendamment les uns des autres dans la liste comprenant des résistances de mesure, des transformateurs de mesure, des sondes à effet Hall, des amplificateurs opérationnels, des circuits logiques, des FPGA, des CPLD, des processeurs.

3. Dispositif selon la revendication 1 ou la revendication 2, **caractérisé en ce que** le dispositif comporte en outre un dispositif de sécurité.

4. Utilisation d'un dispositif selon l'une des revendications 1 à 3 précédentes dans un réseau électrique moyenne tension ou dans un réseau électrique basse tension pour supprimer les courants de court-circuit de choc pendant la phase de démarrage d'au moins un générateur synchrone raccordé au réseau électrique moyenne tension ou au réseau électrique basse tension.

5. Dispositif pour contrôler les courants de court-circuit de choc dans les réseaux d'alimentation électrique selon la revendication 1, **caractérisé en ce que** le dispositif comprend en outre au moins un autre commutateur bidirectionnel à semi-conducteur supplémentaire **(40, 40')** qui permet un chemin de libre passage vers une autre phase ou vers le conducteur neutre.

Fig. 1A

Fig. 1B

$$(\hat{I}_l - \hat{I}_a) \cdot e^{-\frac{t}{T_1}}$$

$$(\hat{I}_a - \hat{I}_d) \cdot e^{-\frac{t}{T_2}}$$

$$\hat{I}_l \cdot e^{-\frac{t}{T_0}}$$

$$\hat{I}^{\prime\prime} = \hat{I}_l$$
$$\hat{I}^{\prime} = \hat{I}_a \qquad \left.\begin{array}{c}\end{array}\right\} \begin{array}{l} \text{Kurzschluß direkt} \\ \text{an der Klemen} \\ \text{des Generators} \end{array}$$
$$\hat{I}_s = \hat{I}_d$$

## Fig. 2A

Fig. 2B

Fig. 3

Fig. 4

Fig. 5

Energieerzeugung

gespeistes Versorgernetz / Belastung

$$R_{mess}L1 = R_{mess}L2 = R_{mess}L3$$

Fig. 6

Fig. 7

Fig. 8

Fig. 9

Außenleiter
Erzeugerseite

zum
Verbraucher

Ansteuerung mittels
IGBT Treiberplatine

Fig. 10

Fig. 11A

Fig. 11B

Fig. 11C

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9209943 A1